(19) **Europäisches Patentamt / European Patent Office / Office européen des brevets**

(11) **EP 4 699 741 A1**

(12) # EUROPEAN PATENT APPLICATION
published in accordance with Art. 153(4) EPC

(43) Date of publication:
**25.02.2026 Bulletin 2026/09**

(21) Application number: **24929799.5**

(22) Date of filing: **12.03.2024**

(51) International Patent Classification (IPC):
**B23Q 15/00** (2006.01)  **G05B 19/18** (2006.01)

(52) Cooperative Patent Classification (CPC):
**B23Q 15/00; G05B 19/18**

(86) International application number:
**PCT/JP2024/009577**

(87) International publication number:
**WO 2025/191692 (18.09.2025 Gazette 2025/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Yamazaki Mazak Corporation**
**Niwa-gun, Aichi 480-0197 (JP)**

(72) Inventors:
• **SAKA, Kotaro**
**Niwa-gun, Aichi 480-0197 (JP)**
• **YAMAMOTO, Mikihito**
**Niwa-gun, Aichi 480-0197 (JP)**
• **KOIKE, Shunsuke**
**Niwa-gun, Aichi 480-0197 (JP)**
• **KATAYAMA, Takuro**
**Niwa-gun, Aichi 480-0197 (JP)**

(74) Representative: **TBK**
**Bavariaring 4-6**
**80336 München (DE)**

(54) **MACHINE TOOL SETTING METHOD, COMPUTER, MACHINE TOOL, MACHINE TOOL SYSTEM, COMPUTER PROGRAM, AND COMPUTER-READABLE MEDIUM**

(57)    A setting method of a machine tool includes controlling a computer to prepare a 3D virtual space that represents a virtual reality environment. The setting method includes controlling the computer to prepare a first 3D model representing a table of the machine tool, a second 3D model representing a workpiece provided on the machine tool, a third 3D model representing a fixture to fasten the workpiece to the table, and a relative position of a program zero with respect to a reference position of the second 3D model, the program zero being used in a machining program to machine the workpiece. The setting method includes controlling the computer to set parameters representing positions and orientations of the first to third 3D models, respectively in the 3D virtual space, and controlling the computer to obtain a position of a measurement point based on the relative position of the program zero, the first to third 3D models, and the parameters, a 3D position of the measurement point in a real space being to be calculated by contacting with the workpiece, a probe attachable to the machine tool.

FIG. 4

EP 4 699 741 A1

# EP 4 699 741 A1

**Description**

Technical Field

The present invention relates to a setting method for a machine tool, a computer, a machine tool, a machine tool system, a computer program, and a computer-readable medium.

Background Art

The machining program generally defines a movement of the cutting edge in the work coordinate system, and in actual machining, the machine tool is required to convert the position in the work coordinate system to the position in the machine coordinate system.

For this conversion, it is necessary to measure in advance the relative positional relationship between the origin of the work coordinate system (called the program zero or the workpiece origin) and the origin of the machine coordinate system (machine origin). Such a measurement workpiece is called zero seek workpiece. In this origin search operation, one of the feature points of the workpiece (for example, a feature point at which the three dimensional position in the machine coordinate system can be accurately measured by moving the probe from at least three directions, such as an end point where three planes intersect, a dent point, and the center of the end face of a round-bar-shaped workpiece) is measured by the probe, and a point moved by a predetermined offset from the feature point is often determined as the program zero. Such characteristic points of the workpiece are called measurement points.

The programmer determines in advance the position and attitude of the workpiece before machining to be attached to the fixture and the origin of the workpiece, and then creates the machining program so that the tool does not interfere with a member other than the workpiece, such as the fixture. On the other hand, the workpiece positioning operation for mounting the workpiece on the fixture at a position where the workpiece can be easily set to the origin and at a position and posture intended by the programmer, and the above-described origin setting operation are often performed by an operator other than the programmer. Therefore, the programmer creates instructions for these operations for the operator separately from the machining program. After the operator performs the workpiece positioning operation according to the instruction, the operator performs the origin setting operation while moving the probe. The operator further registers the measurement position of the machine origin of the measurement point in the machine tool, thereby setting a conversion code (for example, G54) from the machine coordinate system to the work coordinate system. The series of operations by the operator is called setup work. After executing the conversion code, the machine tool executes the machining program created by the programmer to machine the workpiece.

The technique described in Patent Document 1 is for reducing the burden on the operator in the workpiece of origin finding. The technique according to Patent Document 1 requires preparation in advance, in which the center of a cylindrical groove or cylindrical projection is assumed as a program zero, a workpiece including the cylindrical groove or cylindrical projection is arranged, and the approximate center position of the cylindrical groove or cylindrical projection of the arranged workpiece and whether the model of the workpiece is a cylindrical groove or a cylindrical projection are registered. Then, the machine tool according to the patent document 1 determines the optimum measurement point based on the model, and the probe automatically moves based on the model to obtain the two dimensional position of the machine coordinates of the program zero. The patent document 2 is a technique for reducing the burden of an operator in a workpiece positioning operation. The machine tool system according to the patent document 2 photographs a workpiece arranged in an ideal position and attitude by a plurality of cameras, and stores feature points such as edges of the workpiece in a storage device. In the second and subsequent workpiece setup, the machine tool system superimposes the feature point on the image of the workpiece photographed by the camera and displays the image on the display, thereby facilitating the workpiece positioning operation.

Prior Art Document

Patent Documents

[Patent Document 1] Japanese Unexamined Utility Model Application Publication No. S63-091351
[Patent Document 2] WO 2021/161530

SUMMARY OF THE INVENTION

Problems to be Solved by the Invention

**In** the machine tool according to the patent document 1, the operator not only needs to arrange the machine tool so as to adjust the attitude so that the center axis of the cylindrical groove or the cylindrical projection is substantially along the Z-axis so that the center of the cylindrical groove or the cylindrical projection can be measured, but also needs to measure the approximate center position and the assumed height of the cylindrical groove or the cylindrical projection in advance. Therefore, the workpiece positioning operation is not flexible, and the workpiece for the origin setting operation also includes an operation requiring a skilled skill such as the input of the center position and the assumed height. In the machine tool system according to the patent document 2, it is necessary to carefully perform the arrangement workpiece while referring to the instruction document until the workpiece is arranged at the first reference position, and therefore, the first setup work cannot be facilitated.

The object of the technique disclosed in this application is that a three dimensional virtual space is easily set so that a setup work can be intuitively performed by instructing the setup work using a virtual reality. This enables even an operator who does not have highly skilled skills to perform the setup work. Even if the work cannot be performed as instructed due to circumstances such as the work environment of the machine tool, the measurement point can be alternatively determined by the computer numerical controller of the machine tool without changing the program zero in the work set by the programmer.

Means for Solving the Problems

According to a first aspect of the present disclosure, a setting method of a machine tool includes controlling a computer to generate a 3D virtual space that represents a virtual reality environment. The setting method includes controlling a computer to prepare a first 3D model representing a table of the machine tool, a second 3D model representing a workpiece provided on the machine tool, a third 3D model representing a fixture to fasten the workpiece to the table, and a relative position of a program zero with respect to a reference position of the second 3D model, the program zero being used in a machining program to machine the workpiece. The setting method includes controlling the computer to set parameters representing positions and orientations of the first to third 3D models, respectively in the 3D virtual space. The setting method includes controlling the computer to obtain a position of a measurement point based on the relative position of the program zero, the first to third 3D models, and the parameters, a 3D position of the measurement point in a real space being to be calculated by contacting with the workpiece, a probe attachable to the machine tool.

The computer may be a computer included in a computer numerical controller of the machine tool. Such a computer may also be referred to as a computer numerical controller (CNC). The computer may be a computer connected to a computer numerical controller via a communication network. The reference position of the second 3D model may be an origin of a local coordinate system of the object of the second 3D model. The relative position of the program zero from the reference position of the second 3D model may be a coordinate value represented by the local coordinate system, and may be, for example, a relative position represented by a difference between the machine coordinates of the feature point and the machine coordinates of the program zero when the workpiece is installed at a certain position and attitude in the real space with the feature point of the workpiece as the reference position. Preparing the relative position of the program zero from the reference position of the second 3D model by the computer includes causing the computer to store the coordinate value of the program zero represented by the local coordinate system in the storage device as separate data different from the second 3D model.

The position in the 3D virtual space of each of the first to third 3D models may be a position represented by a world coordinate system of the 3D virtual space of each of the reference positions of the first to third 3D models. The position in the 3D virtual space of each of the first to third 3D models may be a position represented by a world coordinate system of the 3D virtual space of each of the reference positions of the first to third 3D models. The setting of parameters representing the position and the posture by the computer includes reading data describing parameters representing the position and the posture by the computer, and receiving input from an operator representing parameters representing the position and the posture through a user interface of the computer.

The feature of causing a computer to determine the position of a measurement point in a 3D virtual space on the basis of the relative position of a program zero, a first to third 3D model, and a parameter includes determining, from a second 3D model, a point on a plane (for example, when the plane is a circular object, the center of the circle is indicated) which can be specified from the vertex where at least three planes of the second 3D model intersect and the contour line of the plane of the second three dimensional model, determining the measurement point on the basis of the relative position of the program zero and the parameter from these points, and calculating the position of the determined measurement point.

According to a second aspect of the present disclosure, the setting method, according to the first aspect, further includes controlling the computer to display in the 3D virtual space, the first to third 3D models, the measurement point, and the program zero in a display in a manner that the measurement point and the program zero are distinguishable from the first to third 3D models. Preferably, the computer displays the first to third 3D models, the measurement point, and the program zero on the display by computer graphics.

According to a third aspect of the present disclosure, the setting method according to the first aspect or the second aspect further includes controlling the computer to set a travel model for moving a tip of the probe in order to obtain the 3D position of the measurement point, and controlling the computer to generate, based on the measurement point, the travel model, and a 3D shape of the second 3D model, a travel plan according to which the probe travels toward each of at least three target destinations on a surface of the workpiece to obtain the 3D position of the measurement point, the travel plan including a travel direction and a travel speed. The travel speed of the probe when a distance between the tip and the target destination is within a predetermined threshold is smaller than the travel speed of the probe when a distance between the tip and the target destination is over the predetermined threshold.

According to a fourth aspect of the present disclosure, the setting method further includes controlling the computer to measure the 3D position of the measurement point by moving the probe according to the travel plan, controlling the computer to determine machine coordinates of the program zero based on the 3D position and a positional relation between the measurement point and the program zero, and controlling the computer to set, based on the machine coordinates of the program zero, correspondence between a machine coordinate system and a work coordinate system whose origin is the program zero, the computer is a computer included by a computer numerical controller in the machine tool. It is preferable that the 3D position of the measurement point is the 3D position of the measurement point represented in the machine coordinate system of the machine tool.

According to the fifth aspect of the present disclosure, in the setting method according to the first aspect, the computer is controlled to obtain at least one position of the at least one option point in the 3D virtual space based on the relative position of the program zero, the first to third 3D models, and the parameters, the at least one option point including the measurement point, the at least one option point being obtained such that respective 3D position of the at least one option point in the real space is measurable by contacting the probe with the workpiece. The feature of causing a computer to determine the position of a measurement point in a 3D virtual space on the basis of the relative position of a program zero, a first to third 3D model, and a parameter includes determining, from a second 3D model, a point on a plane (for example, when the plane is a circular object, the center of the circle is indicated) which can be specified from the vertex where at least three planes of the second 3D model intersect and the contour line of the plane of the second three dimensional model, determining the measurement point on the basis of the relative position of the program zero and the parameter from these points, and calculating the position of the determined measurement point.

According to a sixth aspect of the present disclosure, the setting method according to the fifth aspect further includes controlling the computer to select a selected point from the at least one option point, and controlling the computer to display in the 3D virtual space, the first to third 3D models, the selected point, and the program zero in a display in a manner that the selected point and the program zero are distinguishable from the first to third 3D models. Preferably, the computer displays the first to third 3D models, the selected point, and the program zero on the display by computer graphics.

According to a seventh aspect of the present disclosure, the setting method of the fifth or sixth aspect further includes controlling the computer to select a selected point from the at least one option point, controlling the computer to set a travel model for moving a tip of the probe in order to obtain the 3D position of the selected point; and controlling the computer to generate, based on the selected point, the travel model, and a 3D shape of the second 3D model, a travel plan according to which the probe travels toward each of at least three target destinations on a surface of the workpiece to obtain the 3D position of the selected point, the travel plan including a travel direction and a travel speed. The travel speed of the probe when a distance between the tip and the target destination is within a predetermined threshold is smaller than the travel speed of the probe when a distance between the tip and the target destination is over the predetermined threshold.

According to an eighth aspect of the present disclosure, the setting method of the machine tool according to the seventh aspect further includes controlling the computer to determine the selected point as the measurement point, and controlling the computer to measure the 3D position of the measurement point by moving the probe according to the travel plan, controlling the computer to determine machine coordinates of the program zero based on the 3D position and a positional relation between the measurement point and the program zero, and controlling the computer to set, based on the machine coordinates of the program zero, correspondence between a machine coordinate system and a work coordinate system whose origin is the program zero, the computer is a computer included by a computer numerical controller in the machine tool. It is preferable that the 3D position of the measurement point is the 3D position of the measurement point represented in the machine coordinate system of the machine tool.

According to a ninth aspect of the present disclosure, the setting method according to the third or seventh aspect further includes controlling the computer to display in a display, information indicating a peripheral region with respect to an approaching path along which the probe travels to each of the at least three target destinations in the travel direction and which is within a distance threshold relative to each of the at least three target destinations. Preferably, the computer displays information indicative of the peripheral area by computer graphics.

According to a tenth aspect of the present disclosure, the setting method according to the third aspect, the seventh aspect, or the ninth aspect includes controlling the computer to provide a fourth 3D model reproducing the probe, controlling the computer to determine whether or not an interference state occurs, the interference state being a state in which the fourth 3D model contacts with a 3D model other than the fourth 3D model when the tip travels toward each of the at least three target destinations according to the travel plan, and controlling the computer to display in the display, the first to fourth 3D models, the at least three travel directions, the target destinations corresponding to the travel directions, respectively, and the occurrence of the interference state. Preferably, the computer displays the first to fourth 3D models, at least three travel directions, and the target destinations corresponding to the travel directions on the display by computer graphics.

According to the eleventh aspect of the present disclosure, the setting method according to any one of the third aspect, the seventh aspect, the ninth aspect, or the tenth aspect further includes controlling the computer to set a travel range of the probe in the 3D virtual space, controlling the computer to determine whether a travel path of the probe according to the travel plan belongs to the travel range, and controlling the computer to display in the display, the first to fourth 3D models, the at least three travel directions, the target destinations corresponding to the travel directions, respectively, and information indicating whether the travel path belongs to the travel range. Preferably, the computer causes the display to display information about the range of motion by computer graphics.

In the second aspect, the sixth aspect, and the ninth to eleventh aspects, the display may be a display for visually displaying an output of a computer numerical controller, or a display for visually displaying an output of a computer connected to the computer numerical controller through a communication network. The display may visually display the output of the computer that executes the processing according to the first aspect to the twelfth aspect, or may visually display the output of a computer other than the computer that executes the processing according to the first aspect to the twelfth aspect. In a case where the display visually displays the output of a computer other than the computer executing the processing according to the first aspect to the twelfth aspect, the display can also receive the video signals of the plurality of computers and may visually display the output of the computer executing the processing according to the first aspect to the twelfth aspect. In addition, when the display visually displays the output of a computer other than the computer (hereinafter, referred to as the first computer) that executes the processing according to the first to twelfth aspects, the computer (hereinafter, referred to as the second computer) that outputs the video signal to the display may execute screen sharing with the first computer by a screen sharing application such as a remote desktop, and the first computer may transmit the screen displayed in the second, sixth, ninth to eleventh aspects to the display. Alternatively, the first computer may transmit part or all of the information generated by these aspects to the second computer, and the second computer may generate the screen to be displayed in the second aspect, the sixth aspect, and the ninth to eleventh aspects from the received information.

A computer according to a twelfth aspect of the present disclosure is a computer configured to perform the setting method of the machine tool according to any one of the first to third aspects, the fifth to seventh aspects, and the ninth to eleventh aspects.

A machine tool according to a thirteenth aspect of the present disclosure is a machine tool including the computer configured to perform the setting method of the machine tool according to any of the first to eleventh aspects.

A machine tool system according to a seventeenth aspect of the present disclosure includes a computer configured to perform the setting method of the machine tool according to any one of the second, sixth, and ninth to eleventh aspect, a machine tool including a computer numerical controller connected to the computer via a communication network, and the display configured to visually display an output of the computer numerical controller. In this case, the computer numerical controller may execute a screen sharing application such as a remote desktop, for example, and display a screen generated by the computer on the display of the machine tool. The display of the machine tool can accept two systems of image output of the computer numerical controller and image output of the computer in a switchable manner, and may display a screen generated by the computer after switching to input the image output from the computer. Alternatively, a computer numerical controller may be configured to execute the setting method of the machine tool of any of the second, sixth, and ninth to eleventh aspects, receive from the computer identifiers designating the first to fourth 3D models, the relative position of the program zero, and the plane of the second 3D model through which the tool passes until it first reaches the program zero, calculate the position of the measurement point in the three dimensional virtual space and the position of at least one optional point in the 3D virtual space based on these data, and generate the probe travel plan and the like. Furthermore, a computer numerical controller may receive the position of at least one option point in the 3D virtual space calculated by the computer, and display at least one option point or a measurement point on the display of the machine tool based on the received position of at least one option point in the 3D space.

A computer program according to a fifteenth aspect of the present disclosure comprises instructions for causing a computer to execute the setting method of the machine tool according to any one of claims 1 to 11 when executed by the computer.

A computer program readable medium according to a sixteenth aspect of the present disclosure includes instructions for causing a computer to execute the setting method of the machine tool of claims 1 to 11 when executed by the computer.

The computer according to the twelfth aspect is configured to execute the processing of the setting method according to the first aspect and the processing of the setting method according to the first aspect, a machine tool according to a thirteenth aspect, including a computer configured to execute the setting method according to the first aspect, a computer program according to a fifteenth aspect, comprising instructions for causing the computer to execute the setting method according to the first aspect, and a sixteenth aspect, comprising instructions for causing the computer to execute the setting method according to the first aspect computer readable media for when the position and orientation in the 3D virtual space of each of the first to third 3D models are set, the position of the program zero in the 3D virtual space is calculated without separately setting the position of the program zero, and based on the position of the program zero, measurement point is determined. Accordingly, the programmer can set the program zero and the measurement point automatically by setting only the first to third 3D models, and thus the setting in the 3D virtual space can be facilitated. In particular, the use of the first to third 3D models is effective in that the measurement point can be determined based on the positional relationship with the program zero when the program zero is inside the first 3D model. Furthermore, even when the operation cannot be performed as instructed due to circumstances such as the working environment of the machine tool, the operator can alternatively determine the measurement point in the computer numerical controller of the machine tool without changing the program zero in the workpiece set by the programmer.

The setting method according to the second aspect, the computer according to the twelfth aspect configured to execute the processing of the setting method according to the second aspect, the machine tool according to the thirteenth aspect including the computer configured to execute the processing of the setting method according to the second aspect, the machine tool system according to the fourteenth aspect including the computer configured to execute the processing of the setting method according to the second aspect and the machine tool, the computer program according to the fifteenth aspect including the instruction for causing the computer to execute the setting method according to the second aspect, and the computer-readable medium according to the sixteenth aspect including the instruction for causing the computer to execute the setting method according to the second aspect are as follows. Since the programmer can visually recognize the position of the measurement point and the position of the program zero, the programmer can confirm the setting of the setup work performed by himself. Further, the operator can confirm the setup of the setup work instructed by the programmer and the setup of the setup work corrected by himself/herself in the machine tool.

A setting method according to a third aspect, a computer according to a twelfth aspect configured to execute the processing of the setting method according to the third aspect, a machine tool according to a thirteenth aspect provided with a computer configured to execute the processing of the setting method according to the third aspect, a computer program according to a fifteenth aspect provided with instructions for causing the computer to execute the setting method according to the third aspect, and a computer-readable medium according to a sixteenth aspect provided with instructions for causing the computer to execute the setting method according to the third aspect. In the above, the travel direction can be set perpendicular to the surface of the workpiece on which the target destination is present by using the 3D model of the workpiece, and the distance to the surface of the workpiece can be automatically calculated to set an appropriate deceleration timing of the probe.

A setting method according to a fourth aspect, a machine tool according to a thirteenth aspect, which comprises a computer configured to execute the processing of the setting method according to the fourth aspect, a computer program according to a fifteenth aspect, which comprises instructions for causing the computer to execute the setting method according to the fourth aspect, and a computer-readable medium according to a sixteenth aspect, which comprises instructions for causing the computer to execute the setting method according to the fourth aspect In the above, the 3D position of the measurement point can be automatically measured by the probe to automate the work of extracting the origin.

A setting method according to a fifth aspect, a computer according to a twelfth aspect configured to execute the processing of the setting method according to the fifth aspect, a machine tool according to a thirteenth aspect provided with a computer configured to execute the processing of the setting method according to the fifth aspect, a computer program according to a fifteenth aspect provided with instructions for causing the computer to execute the setting method according to the fifth aspect, and a computer-readable medium according to a sixteenth aspect provided with instructions for causing the computer to execute the setting method according to the fifth aspect In the above, the measurement point can be flexibly determined by using an option point which can be substituted as the measurement point.

A setting method according to a sixth aspect, a computer according to a twelfth aspect configured to execute the processing of the setting method according to the sixth aspect, a machine tool according to a thirteenth aspect provided with a computer configured to execute the processing of the setting method according to the sixth aspect, a machine tool system according to a fourteenth aspect provided with a computer configured to execute the processing of the setting method according to the sixth aspect and the machine tool, a computer program according to a fifteenth aspect provided with an instruction to cause the computer to execute the setting method according to the sixth aspect, and a computer-readable medium according to a sixteenth aspect provided with an instruction to cause the computer to execute the setting method according to the sixth aspect. In addition, when the candidate of the measurement point initially instructed by the programmer is inappropriate, the operator can easily confirm a point that can be alternatively used as the measurement point while referring to the position of the program zero.

The setting method according to the seventh aspect, a machine tool according to a thirteenth aspect provided with a computer configured to execute the processing of the setting method according to the seventh aspect, a computer program according to a fifteenth aspect provided with instructions for causing the computer to execute the setting method according to the seventh aspect, and a computer-readable medium according to a sixteenth aspect provided with instructions for causing the computer to execute the setting method according to the seventh aspect in the above, when the selected point is regarded as the measurement point, the travel direction can be set perpendicular to the surface of the workpiece on which the target destination is present by using a 3D model of the workpiece, and the distance to the surface of the workpiece can be automatically calculated to set an appropriate deceleration timing of the probe.

In the setting method according to the eighth aspect, the machine tool according to the thirteenth aspect, which comprises a computer configured to execute the processing of the setting method according to the eighth aspect, the computer program according to the fifteenth aspect, which comprises instructions for causing the computer to execute the setting method according to the eighth aspect, and the computer-readable medium according to the sixteenth aspect, which comprises instructions for causing the computer to execute the setting method according to the eighth aspect, the selected point is determined as a measurement point, and the 3D position of the measurement point is automatically measured by a probe, thereby automating the work of extracting the origin.

A setting method according to a ninth aspect, a computer according to a twelfth aspect configured to execute the processing of the setting method according to the ninth aspect, a machine tool according to a thirteenth aspect provided with a computer configured to execute the processing of the setting method according to the ninth aspect, a machine tool system according to a fourteenth aspect provided with a computer configured to execute the processing of the setting method according to the ninth aspect and the machine tool, a computer program according to a fifteenth aspect provided with instructions for causing the computer to execute the setting method according to the ninth aspect, and a computer-readable medium according to a sixteenth aspect provided with instructions for causing the computer to execute the setting method according to the ninth aspect in the above, a user such as an operator or a programmer can confirm whether or not the peripheral region interferes with the fixture or the like by referring to the virtual space. Further, when the output device of the computer outputs the result of the determination as to whether the peripheral region is in contact with the first 3D model or the third 3D model, it is possible to easily confirm whether the peripheral region does not interfere with the fixture or the like.

A setting method according to a tenth aspect, a computer according to a twelfth aspect configured to execute the processing of the setting method according to the tenth aspect, a machine tool according to a thirteenth aspect provided with a computer configured to execute the processing of the setting method according to the tenth aspect, a machine tool system according to a fourteenth aspect provided with a computer configured to execute the processing of the setting method according to the tenth aspect and the machine tool, a computer program according to a fifteenth aspect provided with an instruction to cause the computer to execute the setting method according to the tenth aspect, and a computer-readable medium according to a sixteenth aspect provided with an instruction to cause the computer to execute the setting method according to the tenth aspect allow a user to easily check the interference state. Furthermore, by displaying a 3D model of the probe in addition to the 3D models of the workpiece, table, and fixture to simulate the movement of the probe in the virtual space, the user can further easily check the interference state.

The setting method according to the eleventh aspect, the computer according to the twelfth aspect configured to execute the processing of the setting method according to the eleventh aspect, the machine tool according to the thirteenth aspect including the computer configured to execute the processing of the setting method according to the eleventh aspect, the machine tool system according to the fourteenth aspect including the computer configured to execute the processing of the setting method according to the eleventh aspect and the machine tool, the computer program according to the fifteenth aspect including the instruction for causing the computer to execute the setting method according to the eleventh aspect, and the computer-readable medium according to the sixteenth aspect including the instruction for causing the computer to execute the setting method according to the eleventh aspect are as follows, the user can confirm whether the operation range defined by the set travel plan belongs to the movable range.

Effects of the Invention

According to the technique disclosed in the present application, a parameter representing a position and a posture in a 3D virtual space of each of the first to third 3D models is set, a 3D position of a program zero prepared in advance is calculated by using a relative position of the program zero to a reference position of the second 3D model, and a measurement point is determined on the basis of the position of the program zero, so that the setting of the 3D virtual space can be facilitated. In particular, the use of the first to third 3D models is effective in that the measurement point can be determined based on the positional relationship with the program zero when the program zero is inside the first 3D model. Since the workpiece and the fixture may be arranged on the table of the machine tool in accordance with the table, the workpiece and the fixture of the machine tool displayed in the virtual space, the operator can intuitively understand the setup work, and even an operator having no high skill can easily perform the setup work. Even if the table of the machine tool cannot be executed as instructed, if the table of the machine tool, the workpiece, and the 3D model of the fixture are rearranged in a virtual space by a computer numerical controller, the machine tool can determine the approximate position of the measurement point without the operator inputting the position of the program zero and the position of the measurement point by numbers. Therefore, the measurement point can be alternatively determined easily in the computer numerical controller of the machine tool, and the setup work can be flexibly performed.

Brief Description of Drawings

FIG. 1 is a diagram showing a schematic configuration of a system including a machine tool and a computer for generating a machining program for the machine tool according to an embodiment.
FIG. 2 is a diagram showing the configuration of an electronic circuit of the machine tool according to the embodiment.
FIG. 3 is a sectional view showing an outline of a machining head of the machine tool shown in FIG. 1.
FIG. 4 is a diagram for explaining a program zero, at least one option point, and a work coordinate system.
FIG. 5 is an example of a graphics user interface for inputting parameters of a first 3D model and a third 3D model by a measurement point setting program.
FIG. 6 is an example of a graphics user interface of parameters of the second 3D model by the measurement point setting program.
FIG. 7 is an example of a graphics user interface for inputting settings of programs according to the embodiment.
FIG. 8 is a schematic view of a case where a probe is attached to a processing head.
FIG. 9 is a schematic diagram of a virtual space for determining a move procedure.
FIG. 10 shows a method of determining the travel model in a case where a vertex where three or more planes intersect is set as a selected point.
FIG. 11 is a display example in which the peripheral region is highlighted in the example of FIG. 10.
FIG. 12 is a display example showing a case where the operation range of the probe is out of the movable range of the probe in the example of FIG. 10.
FIG. 13 is a diagram showing a method of determining the travel model in a case a vertex where three or more planes in a rectangular groove intersect is set as a selected point $P_S$.
FIG. 14 is a diagram showing a method of determining the travel model in the case where the center of the circular bottom surface is set as the selected point $P_S$.
FIG. 15 shows a method of determining the travel model in the case where the center of the circular bottom surface of the circular groove is set as the selected point $P_S$.
FIG. 16 is a flowchart showing the flow of processing of a measurement point setting program, a probe travel plan generation program, and a movement simulation program according to the present embodiment.
FIG. 17 is a flowchart showing the flow of processing of a measurement point setting program, a probe travel plan generation program, and a movement simulation program according to the present embodiment.
FIG. 18 is a flowchart showing the flow of processing of a measurement point setting program, a probe travel plan generation program, and a movement simulation program according to the present embodiment.
FIG. 19 is a flowchart showing the flow of processing of a measurement point setting program, a probe travel plan generation program, and a movement simulation program according to the present embodiment.
FIG. 20 is a flowchart showing the flow of processing of a measurement point setting program, a probe travel plan generation program, and a movement simulation program according to the present embodiment.
FIG. 21 is a flowchart showing a flow of processing of a program zero measurement program according to the present embodiment.

Detailed Description of the Invention

The present invention will be described in detail below with reference to the drawings showing the embodiments. In the drawings, the same reference numerals indicate corresponding or substantially identical components.

Embodiment

Configuration of Machine Tool

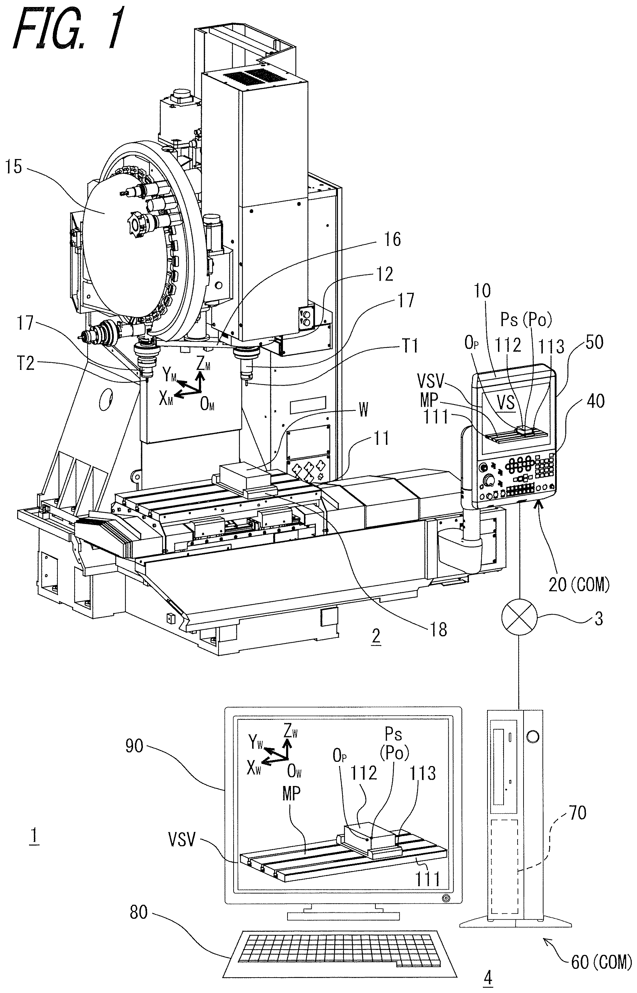

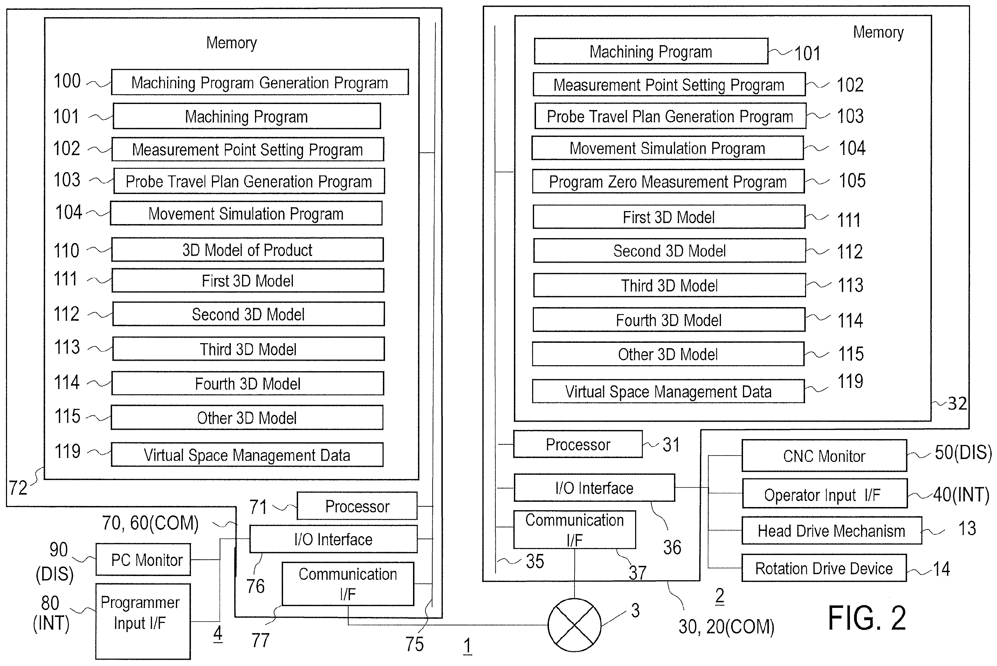

FIG. 1 is a diagram showing an external configuration of a machine tool system 1 according to an embodiment of the present invention. FIG. 2 is a diagram showing the configuration of an electronic circuit of the machine tool system 1 according to the embodiment. Referring to FIGS. 1 and 2, machine tool system 1 includes machine tool having a control computer 20 and graphics processing computer apparatus 4 having a graphics processing computer 60 connected to control computer 20 via communication network 3. The machine tool 2 is, for example, a machining center. The communication network 3 may be a wired communication network such as an intranet or a wireless communication network such as a wireless LAN.

The machine tool 2 includes a control panel 10 including a control computer 20, an operator input interface 40, and a CNC monitor 50. The control computer 20 is typically a computer numerical control (CNC) device that controls the operation of the machine tool 2. The control computer 20 may be referred to simply as a computer numerical controller. The operator input interface 40 is configured by at least one of a touch panel, keys, dials, switches, and buttons. The control computer 20 is configured to accept input from an operator via an operator input interface 40. The CNC monitor 50 is capable of visually displaying the output of the control computer 20. The CNC monitor 50 may be configured to receive a video signal from a graphics processing computer 60, which will be described later, and to display the output of the control computer 20 and the output of the graphics processing computer 60 in a switchable manner.

The graphics processing computer 4 is used by a programmer to generate a machining program 101 and a 3D program for reproducing a setup work environment and instructing a setup work. The graphics processing computer device 4 includes a graphics processing computer 60, a programmer input interface 80, and a PC monitor 90. The graphics processing computer 60 may be a so-called general purpose computer. The programmer input interface 80 is configured by a keyboard, a mouse, and the like. The graphics processing computer 60 is configured to accept input from a programmer via a programmer input interface 80. The PC monitor 90 is configured to visually display the output of the graphics processing computer 60.

In the following embodiments, the control computer 20 and the graphics processing computer 60 may be collectively referred to as a computer COM. When the computer COM is referred to as the operating entity, it is indicated that either the control computer 20 or the graphics processing computer 60 can be the operating entity. The operator input interface 40 and the programmer input interface 80 are collectively referred to as an input interface INT in some cases. In the following embodiments, when the input interface INT of the computer COM is referred to as the operating entity, the input interface corresponding to the computer COM among the operator input interface 40 and the programmer input interface 80 can be the operating entity. When the input interface INT is simply referred to as the operating body, it is shown that either the operator input interface 40 or the programmer input interface 80 can be the operating body regardless of whether or not the input interface INT is the input interface INT of the computer COM.

The CNC monitor 50 and the PC monitor 90 are sometimes collectively referred to as a display DIS. When the display DIS is simply referred to as the operating entity, it is shown that either the CNC monitor 50 or the PC monitor 90 can be the operating entity, regardless of whether the display DIS is configured to visually display the output of the computer COM. When the display DIS of the computer COM is referred to as the operating entity, it is indicated that the operating entity may be the display of the CNC monitor 50 and the PC monitor 90, which is configured to visually display the output of the computer COM. The CNC monitor 50 may be referred to as the display DIS of the control computer 20 (computer numerical controller), and the PC monitor 90 may be referred to as the display DIS of the graphics processing computer 60 (or computer COM defined as being separate from the control computer 20 (computer numerical controller)).

As shown in FIG. 1, the machine tool 2 includes a control panel 10, a table 11, a machining head 12, a tool magazine 15, a tool changer 16, and a fixture 18. The machine tool 2 has a machine coordinate system having a machine origin $O_M$ as an origin and having an $X_M$ axis, a $Y_M$ axis, and a $Z_M$ axis. The processing head 12 is movable in the $X_M$ direction along the $X_M$ axis, the $Y_M$ direction along the $Y_M$ axis, and the $Z_M$ direction along the $Z_M$ axis. A fixture 18 is configured to hold the workpiece W. A fixture 18 is attached to the table 11. A fixture 18 is attached to the table 11. The tool magazine 15 can accommodate both the tool holder 17 for holding the tool T1 and the tool holder 17 for holding the other tool T2. Although not shown in FIG. 1, the machine tool 2 may further include a cover for covering the above-described configuration other than the control panel 10.

Referring to FIG. 2, the control computer 20 includes an electronic circuit 30 having a hardware processor 31, a memory 32, a bus 35, an input/output interface 36, and a communication interface 37. The input/output interface 36 connects the operator input interface 40 and the CNC monitor 50 to the electronic circuit 30. The input/output interface 36 connects the head drive mechanism 13 and the rotation drive device 14, which will be described later, to the electronic circuit 30. The communication interface 37 is configured to communicate with the graphics processing computer 60 via the communication network 3. The memory 32 stores a machining program 101 for machining the workpiece W generated by the graphics processing computer 60. The memory 32 may be referred to as a storage device. The hardware processor 31 executes various programs. In the following embodiments, the hardware processor 31 may be simply referred to as a processor 31.

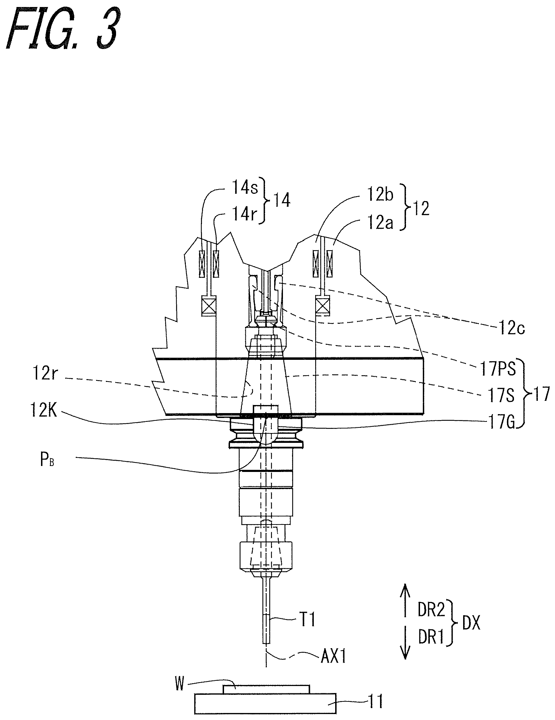

FIG. 3 is a sectional view showing the outline of the machining head 12 of the machine tool 2 shown in FIG. 1. As shown in FIG. 3, the processing head 12 includes a hollow spindle frame 12a forming a housing and a spindle 12b enclosed in the spindle frame 12a. The spindle frame 12a of the machining head 12 is attached to the head drive mechanism 13 shown in FIG. 2 and can move in three axial directions of the $X_M$ axis, the $Y_M$ axis, and the $Z_M$ axis. It is considered that the position of the spindle 12b is based on the center $P_B$ of the tapered gauge line. When the machining program 101 issues an origin return command, the processing head 12 is moved so that the position of the center $P_B$ is located at the machine origin $O_M$. One end of the spindle 12b is connected to a rotation drive device 14 such as a motor, for example, and is configured to rotate around the rotation axis AX1. The rotation drive device 14 includes a stator 14s fixed to the spindle frame 12a and a rotor 14r fixed to the spindle 12b. The head drive mechanism 13 and the rotation drive device 14 are connected to the control computer 20 via an input/output interface 36.

A tool holder 17 is detachably attached to the lower end of the spindle 12b. FIG. 3 shows a tool T1 according to the embodiment. The tool T1 is, for example, a cutting tool. The tool T1 is held by the tool holder 17. The tool holder 17 has a holder shank 17S, a groove 17G, and a pull stud 17PS. The spindle 12b includes a collet chuck 12c which can be fitted into the pull stud 17PS, a receiving hole 12r into which the holder shank 17S can be inserted, and a key 12K which can be fitted into the groove 17G. The receiving hole 12r has a tapered shape in a cross-sectional view, and a closed curve at the lower end of the receiving hole 12r is referred to as the tapered gauge line. The collet chuck 12c is movable in the axial direction DX along the rotation axis AX1 of the spindle 12b. When the collet chuck 12c is shifted in the first direction DR1 from the pull stud 17PS toward the tool T1 in the axial direction DX, the collet chuck 12c is configured to open in the radial direction with respect to the rotation axis AX1, and the pull stud 17PS becomes detachable. When the collet chuck 12c is shifted in the second direction DR2 from the tool T1 toward the pull stud 17PS in the axial direction DX, the collet chuck 12c is configured to close in the radial direction with respect to the rotation axis AX1 and is fitted to the pull stud 17PS. The pull stud 17PS is fitted into the collet chuck 12c, whereby the tool holder 17 is fixed to the spindle 12b. At this time, the key 12K of the spindle 12b is fitted into the groove 17G of the tool holder 17, so that the rotation of the tool holder 17 with respect to the spindle 12b is restricted.

Referring to FIG. 2, the graphics processing computer 60 includes a hardware processor 71, a memory 72, a system bus 75, an input/output interface 76, and an electronic circuit 70 including a communication interface 77. The hardware processor 71, the memory 72, the system bus 75, the input/output interface 76, and the communication interface 77 have substantially the same functions as those of the hardware processor 31, the memory 32, the bus 35, the input/output interface 36, and the communication interface 37. The input/output interface 76 connects the programmer input interface 80 and the PC monitor 90 to the electronic circuit 70. The communication interface 77 is configured to communicate with the control computer 20 via the communication network 3. The memory 72 stores a machining program generation program 100 for generating the machining program 101 described above. The memory 72 may be referred to as a storage device. The hardware processor 71 executes various programs. In the following embodiments, the hardware processor 71 may be simply referred to as a processor 71.

The machining program generation program 100 is, for example, a machining program generation program disclosed in WO2021-014571. The machining program generation program 100 is a program for automatically generating a machining program 101 together with a 3D model of a workpiece W including a 3D model of a product when the 3D model 110 of the product is input. Hereinafter, the 3D model of the workpiece W is referred to as a second 3D model 112. The second 3D model 112 is a 3D model for reproducing the workpiece W in the 3D virtual space VS described later. The processor 71 for executing the machining program generation program 100 determines the relative position from the second 3D model 112 of the program zero $O_P$ when generating the machining program 101.

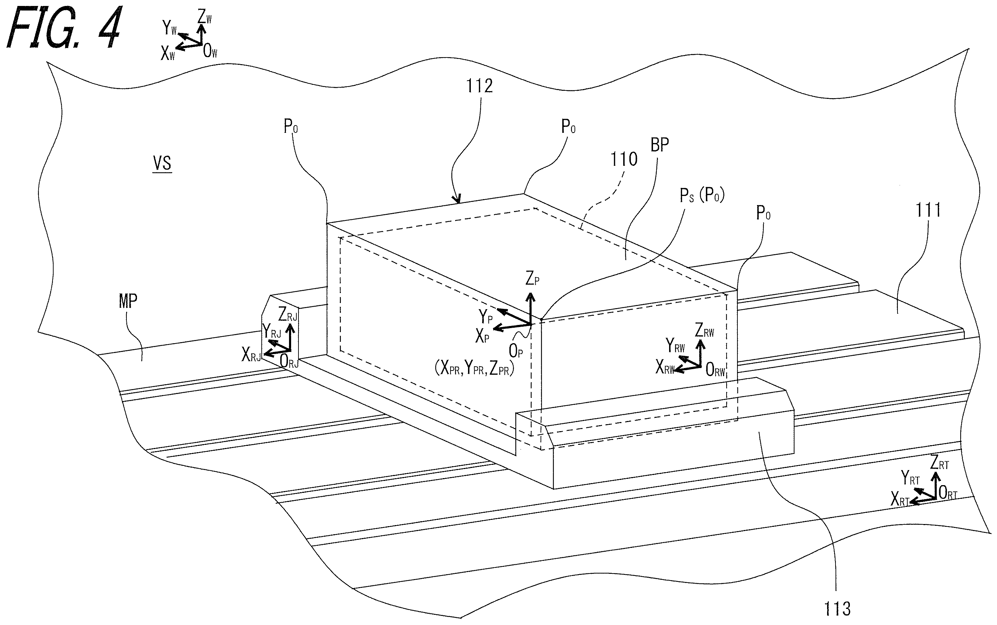

FIG. 4 is a diagram for explaining the program zero $O_P$, the reference plane BP, and the like. The programmer creates the machining program 101 while defining the tool path in the work coordinate system $O_P\text{-}X_P Y_P Z_P$ with the program zero $O_P$ as a reference point for easily creating the tool path (the movement path of the tool T1) in the machining program 101 as a program zero $O_P$ and the program zero $O_P$ as a reference point, respectively. The second 3D model 112 has a local $O_{RW}\text{-}X_{RW} Y_{RW} Z_{RW}$ to define the relative positions of vertices and faces in the model. The local coordinate system is also referred to as the model coordinate system. The reference position of the second 3D model 112 is preferably the position of the origin $O_{RW}$ of this local coordinate system. The relative position of the program zero $O_P$ to the reference position of the second 3D model 112 is the local coordinates $(X_{PR}, Y_{PR}, Z_{PR})$ represented by the local coordinate system $O_{RW}\text{-}X_{RW} Y_{RW} Z_{RW}$ of the second 3D model 112 of the program zero.

The processor 71 for executing the machining program generation program 100 may store the local coordinates $(X_{PR}, Y_{PR}, Z_{PR})$ of the program zero $O_P$ in the virtual space management data 119 of the memory 72 when generating the machining program 101.

Referring back to FIG. 2, the storage devices (memory 32 and memory 72) store the measurement point setting program 102. The measurement point setting program 102 has a function of generating a 3D virtual space VS representing a virtual reality environment by using computer graphics. The PC monitor 90 and the CNC monitor 50 in FIG. 1 display a view VSV of the generated 3D virtual space VS. Since the view VSV is generated by 3D computer graphics, it is possible to change the view by performing a gaze change. The first 3D model 111 is a 3D model that reproduces the table 11 of the machine tool 2 in the 3D virtual space VS. The third 3D model 113 is a 3D model that reproduces the fixture 18 in the 3D virtual space VS. For this end, the dimensions of the first to third 3D models 111 to 113 are determined so that the unit of the local coordinate system $O_{RT}\text{-}X_{RT} Y_{RT} Z_{RT}$ of the first 3D model 111, the unit of the local coordinate system $O_{RW}\text{-}X_{RW} Y_{RW} Z_{RW}$ of the second 3D model 112, and the unit of the local coordinate system $O_{RJ}\text{-}X_{RJ} Y_{RJ} Z_{RJ}$ of the third 3D model 113 are the same as the unit (unit in real space, e.g., mm) of the table 11, the workpiece W, and the fixture 18 in the mechanical coordinate system $O_M$-$X_M Y_M Z_M$. The virtual space management data 119 manages parameters representing the position and orientation of each of the first 3D model 111, the second 3D model 112, and the third 3D model 113 in the 3D virtual space VS.

The first 3D model 111, the second 3D model 112, the third 3D model 113, and the virtual space management data 119 are preferably stored in the memory 32 of the control computer 20 and the memory 72 of the graphics processing computer 60. Preferably, the first 3D model 111, the second 3D model 112, the third 3D model 113, and the virtual space management data 119 are first generated or prepared by the graphics processing computer 60 and shared with the control computer 20 using a well-known file sharing application. In this way, the computer COM which executes the measurement point setting program 102 prepares the relative positions of the first 3D model 111, the second 3D model 112, the third 3D model 113, and the program zero $O_P$ from the reference position of the second 3D model 112.

A computer COM which executes a measurement point setting program 102 reads a first 3D model 111, a second 3D model 112, a third 3D model 113, and virtual space management data 119 which manages parameters of a 3D virtual space VS, generates the 3D virtual space VS, and sets parameters representing the position and orientation of each of the first to third 3D models 111 to 113 in the 3D virtual space VS. When API is used for drawing 3D graphics such as OpenGL and DirectX are used, a point $(x_T, y_T, z_T)$ represented by the local coordinate system $O_{RT}$-$X_{RT} Y_{RT} Z_{RT}$ of the first 3D model 111, a point $(x_W, y_W, z_W)$ represented by the local coordinate system $O_{RW}$-$X_{RW} Y_{RW} Z_{RW}$ of the second 3D model 112, and a point $(x_J, y_J, z_J)$ represented by the local coordinate system $O_R J$-$X_{RJ} Y_{RJ} Z_{RJ}$ of the third 3D model 113 can be converted into coordinates $(x_{WT}, y_{WT}, z_{WT})$, $(x_{WW}, y_{ww}, z_{ww})$, and $(x_{WJ}, y_{WJ}, z_{WJ})$ of the world coordinate system $O_W$-$X_W Y_W Z_W$ which are the reference for expressing the position and posture in the 3D virtual space VS by the following equations. It is assumed that the unit of the world coordinate system $O_W$-$X_W Y_W Z_W$ is set to be the same as the unit of the local coordinate system $O_{RT}$-$X_{RT} Y_{RT} Z_{RT}$ of the first 3D model 111, the unit of the local coordinate system $O_{RW}$-$X_{RW} Y_{RW} Z_{RW}$ of the second 3D model 112, and the unit of the local coordinate system $O_R J$-$X_{RJ} Y_{RJ} Z_{RJ}$ of the third 3D model 113.

The origin $O_{RT}$ of the local coordinate system $O_{RT}$-$X_{RT} Y_{RT} Z_{RT}$ of the first 3D model 111 is a point shifted by $(a_T, b_T, c_T)$ from the origin Ow of the world coordinate system Ow-$X_W Y_W Z_W$, and if the rotation is performed by $\alpha_T$ around the right screw around the $X_W$-axis, $\beta_T$ around the right screw around the $Y_W$-axis, and $\gamma_T$ around the right screw around the $Z_W$-axis, the following (Equation 1) is established when the orientation coincides with the orientation of the local coordinate system $O_{RT}$-$X_{RT} Y_{RT} Z_{RT}$.

[Equation 1]

$$\begin{pmatrix} x_{WT} \\ y_{WT} \\ z_{WT} \\ 1 \end{pmatrix} = Rot(Zw, \gamma_T) \cdot Rot(Yw, \beta_T) \cdot Rot(Xw, \alpha_T) \cdot Trans(a_T, b_T, c_T) \cdot \begin{pmatrix} x_T \\ y_T \\ z_T \\ 1 \end{pmatrix} \text{[Equation 1]}$$

The origin $O_{RW}$ of the local coordinate system $O_{RW}$-$X_{RW} Y_{RW} Z_{RW}$ of the second 3D model 112 is a point shifted by $(a_W, bw, cw)$ from the origin Ow of the world coordinate Ow-$X_W Y_W Z_W$, and if rotated by $\alpha_W$ about the right screw around the $X_W$-axis, by $\beta_W$ about the right screw around the $Y_W$-axis, and by $\gamma_W$ about the right screw around the $Z_W$-axis, the following (Equation 2) is established when the direction coincides with the direction of the local coordinate $O_{RW}$-$X_{RW} Y_{RW} Z_{RW}$.

[Equation 2]

$$\begin{pmatrix} x_{WW} \\ y_{WW} \\ z_{WW} \\ 1 \end{pmatrix} = Rot(Zw, \gamma_W) \cdot Rot(Yw, \beta_W) \cdot Rot(Xw, \alpha_W) \cdot Trans(a_W, b_W, c_W) \cdot \begin{pmatrix} x_W \\ y_W \\ z_W \\ 1 \end{pmatrix} \text{[Equation 2]}$$

The origin $O_{RJ}$ of the local coordinate system $O_R J$-$X_{RJ} Y_{RJ} Z_{RJ}$ of the third 3D model 113 is the point shifted by $(a_J, b_J, c_J)$ from the origin Ow of the above and is rotated by $\alpha_J$ about the right screw around the $X_W$-axis, $\beta_J$ about the right screw around the $Y_W$-axis, and $\gamma_J$ about the right screw around the $Z_W$-axis, the following (Equation 3) is established when the direction coincides with the direction of the local coordinate system $O_{RJ}$-$X_{RJ} Y_{RJ} Z_{RJ}$.

[Equation 3]

$$\begin{pmatrix} x_{WJ} \\ y_{WJ} \\ z_{WJ} \\ 1 \end{pmatrix} = Rot(Zw, \gamma_J) \cdot Rot(Yw, \beta_J) \cdot Rot(Xw, \alpha_J) \cdot Trans(a_J, b_J, c_J) \cdot \begin{pmatrix} x_J \\ y_J \\ z_J \\ 1 \end{pmatrix} \text{[Equation 3]}$$

Note that Rot ($Z_W$, $\gamma$), Rot ($Y_W$, $\beta$), Rot ($X_W$, $\alpha$), and Trans (a, b, c) are represented by the following matrices.

[Equation 4]

$$Trans(a,b,c) = \begin{pmatrix} 1 & 0 & 0 & a \\ 0 & 1 & 0 & b \\ 0 & 0 & 1 & c \\ 0 & 0 & 0 & 1 \end{pmatrix}$$

[Equation 5]

$$Rot(Xw, \alpha) = \begin{pmatrix} 1 & 0 & 0 & 0 \\ 0 & \cos\alpha & \sin\alpha & 0 \\ 0 & -\sin\alpha & \cos\alpha & 0 \\ 0 & 0 & 0 & 1 \end{pmatrix}$$

[Equation 6]

$$Rot(Yw, \beta) = \begin{pmatrix} \cos\beta & 0 & \sin\beta & 0 \\ 0 & 1 & 0 & 0 \\ -\sin\beta & 0 & \cos\beta & 0 \\ 0 & 0 & 0 & 1 \end{pmatrix}$$

[Equation 7]

$$Rot(Zw, \gamma) = \begin{pmatrix} \cos\gamma & -\sin\gamma & 0 & 0 \\ \sin\gamma & \cos\gamma & 0 & 0 \\ 0 & 0 & 1 & 0 \\ 0 & 0 & 0 & 1 \end{pmatrix}$$

It is preferable that the $X_W$ axis of the world coordinate system is oriented in the same direction as the $X_M$ axis of the machine coordinate system so that the operator can easily find the correspondence between the 3D virtual space VS and the real space on the table 11 of the machine tool 2. Preferably, the $Y_W$ axis of the world coordinate system is oriented in the same direction as the $Y_M$ axis of the machine coordinate system. Preferably, the $Z_W$ axis of the world coordinate system is oriented in the same direction as the $Z_M$ axis of the machine coordinate system. Preferably, the origin Ow of the world coordinate system coincides with the machine origin $O_M$. Rot ($Z_W$, $\gamma_T$) Rot ($Y_W$, $\beta_T$) Rot ($X_W$, $\alpha_T$) Trans ($a_T$, $b_T$, $c_T$), Rot ($Z_W$, $\gamma_W$) Rot ($Y_W$, $\beta_W$) Rot ($X_W$, $\alpha_W$) Trans ($a_W$, $b_W$, $c_W$), Rot ($Z_W$, $\gamma_J$) Rot ($Y_W$, $\beta_J$) Rot ($X_W$, $\alpha_J$) Trans ($a_J$, $b_J$, $c_J$) as described above are called homogeneous transformation matrices. The parameters representing the position and orientation in each of 3D virtual space VS of 3D models 111 to 113 may be homogeneous transformation matrices of the respective models, or may be values of ($a_T$, $b_T$, $c_T$, $\alpha_T$, $\beta_T$, $\gamma_T$) ($a_W$, $b_W$, $c_W$, $\alpha_W$, $\beta_W$, $\gamma_W$) ($a_J$, $b_J$, $c_J$, $\alpha_J$, $\beta_J$, $\gamma_J$). When the virtual space management data 119 includes such parameters, the setting of these parameters may be realized by reading the virtual space management data 119 and executing a drawing command of the first to third 3D models 111 to 113 based on these parameters by an API used for drawing 3D graphics.

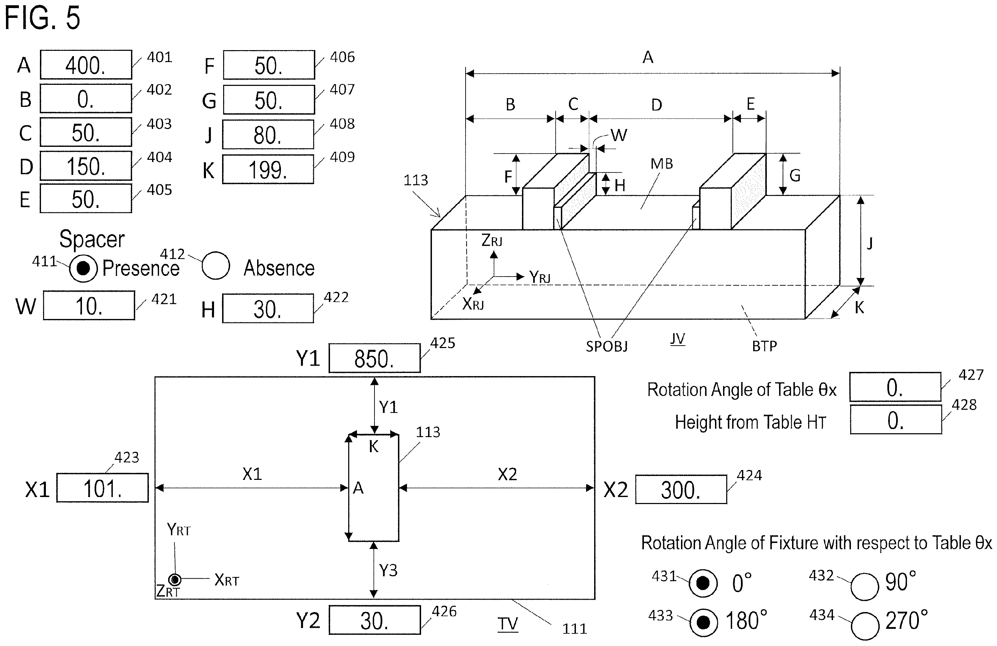

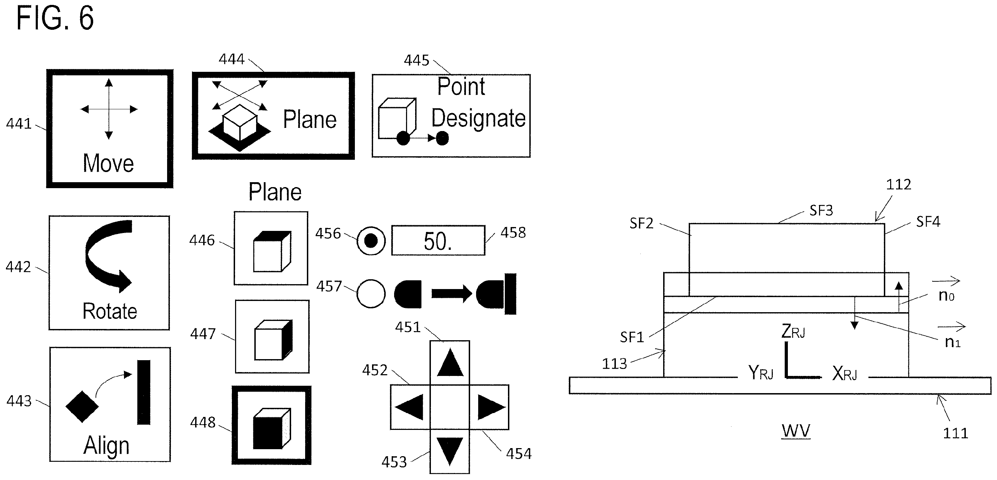

In the case where the setting of the virtual space management data 119 is changed or the virtual space management data 119 is not set, the setting of these parameters may be executed by displaying a graphic user interface (GUI) as shown in FIGS. 5 and 6 on the display DIS of the computer COM to further receive input from a user such as a programmer or an operator. FIG. 5 shows an example of a GUI for setting parameters representing the position and orientation of the 3D virtual space VS of the first 3D model 111 and the third 3D model 113. The GUI shown in FIG. 5 may be all included in one window, or may be displayed in a plurality of windows. The computer COM which executes the measurement point setting program 102 displays the GUI shown in FIG. 5.

The GUI includes text boxes 401 to 409 and 421 to 428 and radio buttons 411, 412, and 431 to 434. Text boxes 401 to 409 are GUIs for setting each of a plurality of dimensions of the third 3D model 113 shown in the view JV shown to the right of text boxes 401 to 409. Radio buttons 411 and 412 are GUIs for setting whether or not the third 3D model 113 includes a spacer object SPOBJ. One of the radio buttons 411 and 412 can be selected. When the radio button 411 is selected, a spacer object SPOBJ having dimensions set in the text boxes 421, 422 is added to the third 3D model 113.

The computer graphics view TV shown in the lower portion of FIG. 5 is a view of an object on which the first 3D model 113 is placed on the first 3d model 111, as viewed in the $Z_{RT}$ axis direction of the local coordinate system $O_{RT}$-$X_{RT}Y_{RT}Z_{RT}$ of the first 3D model 101. The third 3D model 113 is placed on the first 3D model 111 such that the bottom surface BTP (see view JV) thereof is oriented parallel to the mounting surface MP (see FIGS. 1, 4, etc.) of the first 3D model 111. In order to easily realize this, it is desirable that the first 3D model 111 and the third 3D model 113 are prepared such that the normal vector of the mounting surface MP of the first 3D model 113 is directed in the negative direction of the $Z_{RT}$ shaft and the normal vector of the bottom surface BTP of the third 3D model 111 is directed in the positive direction of the $Z_{RJ}$ shaft in the direction of the local coordinate system $O_{RJ}$-$X_{RJ}Y_{RJ}Z_{RJ}$ of the third 3D model 113.

If the orientation of the local coordinate system $O_{RJ}$-$X_{RJ}Y_{RJ}Z_{RJ}$ of the third 3D model 113 is the orientation shown in the view JV and the orientation of the local coordinate system $O_{RT}$-$X_{RT}Y_{RT}Z_{RT}$ of the first 3D model 111 is the orientation shown in the view TV, the orientation of the local coordinate system $O_{RT}$-$X_{RT}Y_{RT}Z_{RT}$ of the first 3D model 111 can be set to the orientation rotated by 0 degrees, 90 degrees, 180 degrees, or 270 degrees around the ZRJ axis of the local coordinate system $O_{RJ}$-$X_{RJ}Y_{RJ}Z_{RJ}$ of the third 3D model 113 by selecting any one of the radio buttons 431 to 434. Only one of the radio buttons 431 to 434 can be selected. Since the fixture 18 can be disposed only in one of the four directions indicated by the radio buttons 431 to 434 with respect to the table 11, it is preferable that only the angle at which the fixture 18 can be disposed in this manner can be set by the radio button based on the direction of the local coordinate system $O_{RJ}$-$X_{RJ}Y_{RJ}Z_{RJ}$ of the third 3D model 113.

The text boxes 423 to 426 are set to be located at the positions of the XRJ coordinate and the YRJ coordinate shown in the view TV. When the numerical value of any one of the text boxes 423 to 426 is changed, the computer COM executing the measurement point setting program 102 automatically corrects the remaining length based on the shape of the first 3D model 111 and the orientation selected by the radio buttons 431 to 434. A text box 428 represents the distance between the bottom BTP of the third 3D model 113 and the mounting surface MP of the first 3D model 111. Normally, 0 is set in the text box 428, but when a spacer is set between the fixture 18 and the table 11, a value of 0 or more may be set.

The table 11 is configured to be rotatable about the $X_M$ axis of the machine coordinate system $O_M$-$X_MY_MZ_M$. In the 3D virtual space VS, the attitude of the table 11 is defined such that the $X_{RT}$ axes of the local coordinate systems $O_{RT}$-$X_{RT}Y_{RT}Z_{RT}$ of the first 3D model 111 are along the $X_W$ axes of the world coordinate systems $O_W$-$X_WY_WZ_W$. A text box 427 represents the rotation angle of the table 11 about the axis of rotation along the $X_M$ axis. Normally, 0 is set in the text box 427, but a value other than 0 may be set when the table 11 is rotated.

FIG. 6 shows an example of a GUI for setting parameters representing the position and orientation of the second 3D model 112 with respect to the third 3D model 113. The GUI shown in FIG. 6 may be all included in one window, or may be displayed separately in a plurality of windows. The computer COM which executes the measurement point setting program 102 displays the GUI shown in FIG. 6. The GUI includes object manipulation buttons 441 to 445, view selection buttons 446 to 448, direction buttons 451 to 454, manipulated variable indication radio buttons 456 and 457, and manipulated variable indication text boxes 458. The view selection buttons 446 to 448 are buttons for selecting a view of the assembly model in which the first to third 3D models 111 to 113 are assembled, which is viewed along the $X_{RJ}$, $Y_{RJ}$, or $Z_{RJ}$ axes of the local coordinate system $O_{RJ}$-$X_{RJ}Y_{RJ}Z_{RJ}$ of the third 3D model 113, as the right view WV in FIG. 6. Only one of the view selection buttons 446 to 448 can be selected. FIG. 6 shows an example in which the button 448 is selected, and the button 448 is highlighted. When the button 446 is selected, a view of the assembly model along the ZRJ axes is displayed as a view WV. When the button 447 is selected, a view of the assembly model oriented along the XRJ axis is displayed as a view WV. When the button 448 is selected, a view of the assembly model oriented along the $X_{RJ}$ axis is displayed as a view WV. By default, the position and orientation of the second 3D model 112 are set such that a plane of the second 3D model 112, which is directed in the negative direction of the $Z_{RW}$ shaft of the local coordinate system $O_{RW}$-$X_{RW}Y_{RW}Z_{RW}$, is disposed on the mounting surface MB (see the view JV in FIG. 5) of the fixture 18, out of the surfaces of the second 3D model 112.

The move button 441, the rotation button 442, and the face alignment button 443 are buttons that can be selected. The plane button 444 and the point designation button 445 are valid only when the move button 441 is selected, and are invalid when either the rotation button 442 or the face alignment button 443 is selected. Either one of the plane button 444 and the point designation button 445 can be selected. When the move button 441 is selected, any one of the operation amount instruction radio buttons 456 and 457 can be selected. When the rotation button 442 is selected, the radio button 456 is automatically selected and the radio button 457 is disabled. When the face alignment button 443 is selected, the radio buttons 456 and 457 and the text box 458 are disabled.

When any one of the direction indication buttons 451 to 454 is pressed when the move button 441 is selected and the plane button 444 is selected, the computer COM executing the measurement point setting program 102 moves the second 3D model 112 in the direction indicated by the direction indication buttons 451 to 454 in the view WV. When the radio button 456 is selected, the computer COM executing the measurement point setting program 102 moves the second 3D model 112 in the direction of the selected button by the value indicated in the text box 458 when one of the direction indication buttons 451 to 454 is selected once. When the radio button 457 is selected, the computer COM executing the measurement point setting program 102 moves the second 3D model 112 in the direction of the selected button until the second 3D model 310 touches another object, when one of the direction indication buttons 451 to 454 is selected once. When there is no other object in the selected direction, the movement is invalidated.

When the move button 441 is selected and the point designation button 445 is selected, when one point in the region of the second 3D model 112 of the view WV is selected by clicking or touching, and another point in the view WV is selected by clicking or touching, the computer COM which executes the measurement point setting program 102 moves the second 3D model 112 so that the point selected first moves to the point selected later. When the rotation button 442 is selected and the direction button 452 is selected, the computer COM executing the measurement point setting program 102 rotates the second 3D model 112 counterclockwise by the value indicated in the text box 458 with respect to the axis along the viewing direction of the view WV. The unit of the value in this case is degree or radian. When the rotation button 442 is selected and the direction button 454 is selected, the computer COM executing the measurement point setting program 102 rotates the second 3D model 112 clockwise by the value indicated in the text box 458 with respect to the axis along the viewing direction of the view WV.

When the face alignment button 443 is selected and the direction indication button 452 is selected, the computer COM executing the measurement point setting program 102 executes the measurement point setting program in a counterclockwise direction with respect to an axis along the viewing direction of the view WV. At this time, the second 3D model 112 is rotated such that any one plane (planes SF1 to SF4 in the example of FIG. 6) of the second 3D model 112 is oriented parallel to the mounting surface MB (see the view JV in FIG. 5) of the fixture 18. In the example of FIG. 6, when the face alignment button 443 is selected and the direction button 452 is selected once, the second 3D model 112 is rotated so that the plane SF2 faces downward. If the face alignment button 443 is selected and the direction button 452 is selected twice, the second 3D model 112 is rotated such that the plane SF3 is directed downward. If the face alignment button 443 is selected and the direction button 452 is selected three times, the second 3D model 112 is rotated so that the plane SF4 is directed downward.

When the face alignment button 443 is selected and the direction indication button 454 is selected, the computer COM executing the measurement point setting program 102 rotates the second 3D model 112 clockwise with respect to the axis along the viewing direction of the view WV. At this time, the second 3D model 112 is rotated such that any one plane (planes SF1 to SF4 in the example of FIG. 6) of the second 3D model 112 is oriented parallel to the mounting surface MB (see the view JV in FIG. 5) of the fixture 18. In the example of FIG. 6, when the face alignment button 443 is selected and the direction indication button 454 is selected once, the second 3D model 112 is rotated so that the plane SF4 is directed downward. If the face alignment button 443 is selected and the direction button 454 is selected twice, the second 3D model 112 is rotated so that the plane SF3 is directed downward. If the face alignment button 443 is selected and the direction button 454 is selected three times, the second 3D model 112 is rotated so that the plane SF2 is directed downward.

The rotation angle can be obtained, for example, as follows. All surfaces of the 3D model 112 are represented as boundary representation (Brep) of the 3D model. The boundary representation (Brep) contains three elements: vertices, edges, and surfaces (faces). A face is an area bounded by edges. The surface element includes the normal vector of the vertex and the equation of the surface. In the technical field of 3D graphics, the normal vector defined by the boundary representation is defined as the vector that points to the exterior of the 3D object. The computer COM which executes the measurement point setting program 102 is configured to obtain the normal vector $\vec{n_0}$ of the mounting surface MB of the fixture 18 from the boundary representation (Brep) of the mounting surface MB of the third 3D model 113. The computer COM executing the measurement point setting program 102 calculates the normal vectors $\vec{n_1}, \vec{n_2}, \vec{n_3}, \vec{n_4}$ of the planes SF1, SF2, SF3, and SF4 from each of the respective boundary representation of the second 3D model 112. These normal vectors are typically defined in the local coordinate system $O_{RW}\text{-}X_{RW}Y_{RW}Z_{RW}$ of the second 3D model 112. Therefore, the computer COM which executes the measurement point setting program 102 is capable of executing the post-rotation $\vec{n_1}, \vec{n_2}, \vec{n_3}, \vec{n_4}$ but $-\vec{n_0}$). The homogeneous transformation matrix is determined and rotated so as to obtain the following equation. When at least one of the planes SF1 to SF4 is a curved surface, the normal vectors at the plurality of vertices constituting the surface are different from each other, but in this case, a vector obtained by synthesizing the normal vectors may be regarded as a normal vector representing the surface and may be rotated.

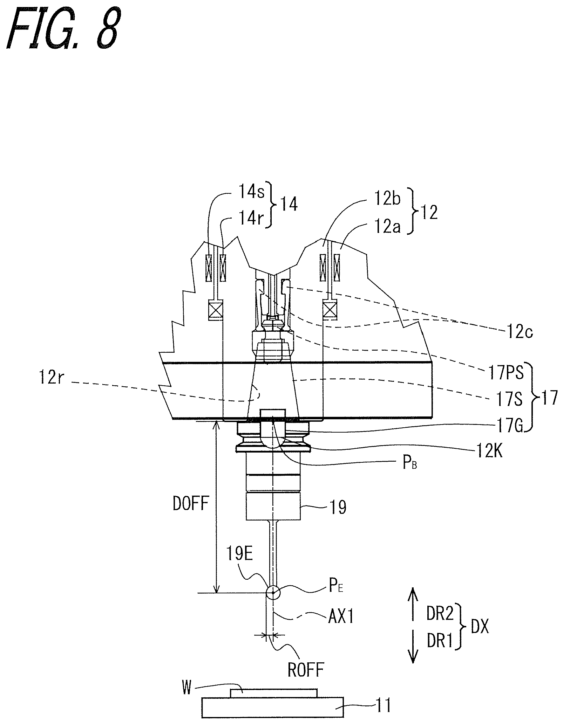

By using the rotation button 442 and the face alignment button 443, the programmer can set a surface (reference plane BP described later) having a point suitable for measuring the position by the probe 19 (see FIG. 8) among the plurality of surfaces of the second 3D model 112 on a substantially opposite side of the surface facing the mounting surface MB of the fixture 18. Since the programmer knows the tool path in the machining program 101, the reference plane BP suitable for machining can be set. Since it is preferable that the operator who performs the setup work does not change the orientation of the second 3D model 112 set in this way, it is preferable that only the GUI relating to the movement and rotation of the third 3D model 113 with respect to the first 3D model 111 is effective when the control computer 20 executes the measurement point setting program 102.

As described above, when the positions and orientations of the first to third 3D models 111 to 113 are set, the parameters representing the positions and orientations of the first to third 3D models 111 to 113 in the 3D virtual space VS are stored as the virtual space management data 119. When the parameter is set, the computer COM executing the measurement point setting program 102 determines the position in the 3D virtual space VS of at least one option point $P_O$, the 3D position of which in the real space can be measured by bringing a probe 19 (see FIG. 8) attachable to the machine tool 2 into contact with the workpiece W, on the basis of the relative position of the program zero $O_P$, the first to third 3D models 111 to 113, and the parameter.

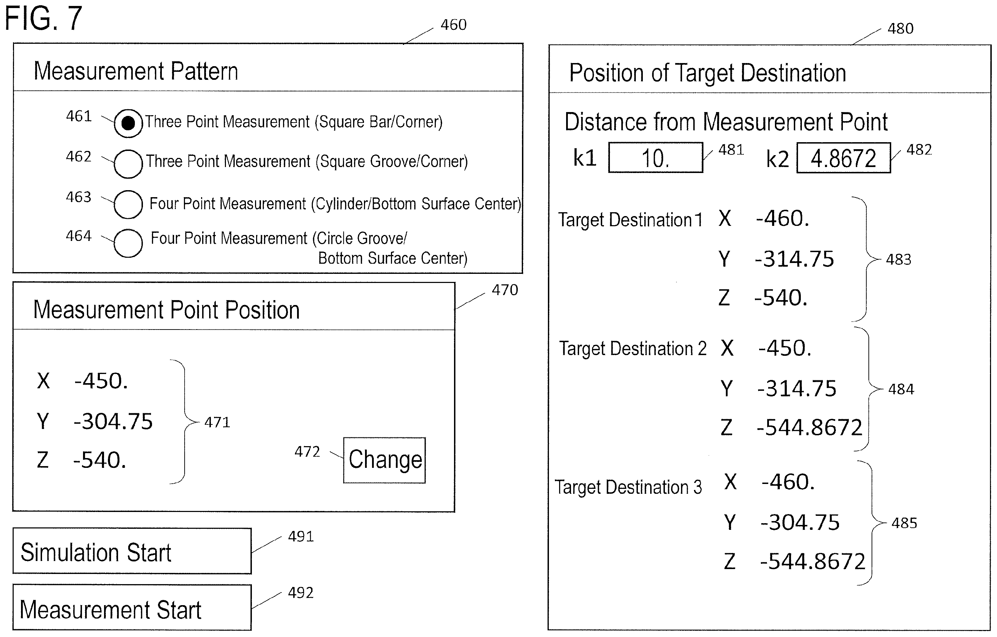

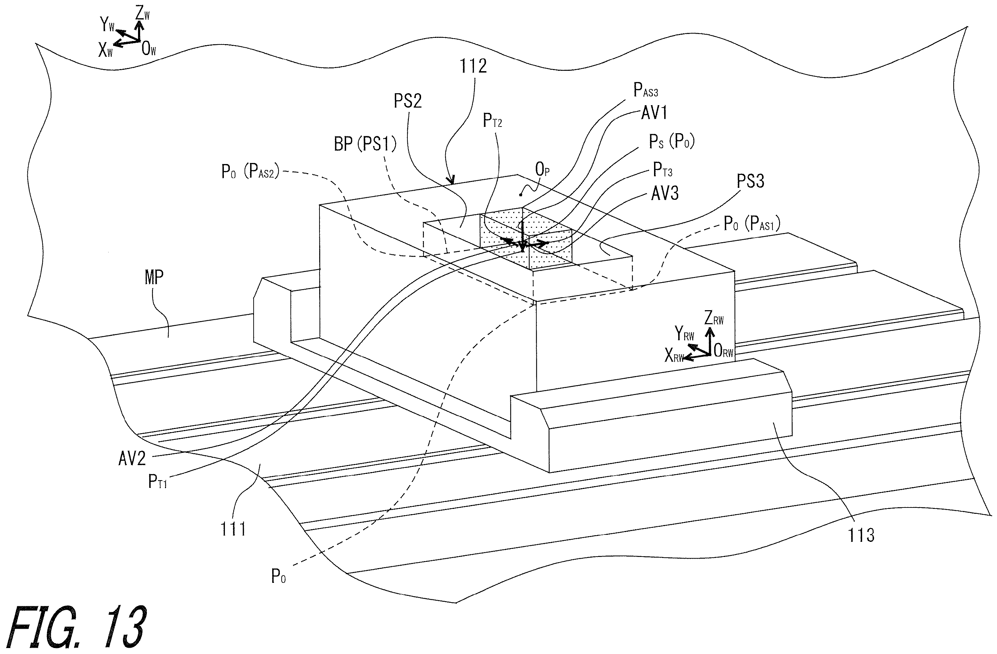

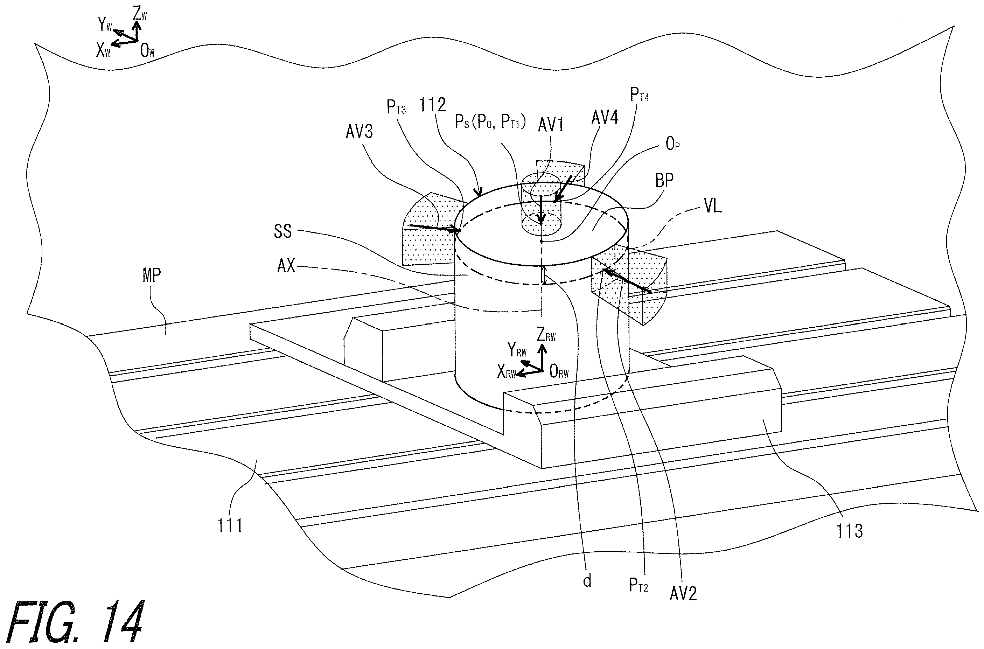

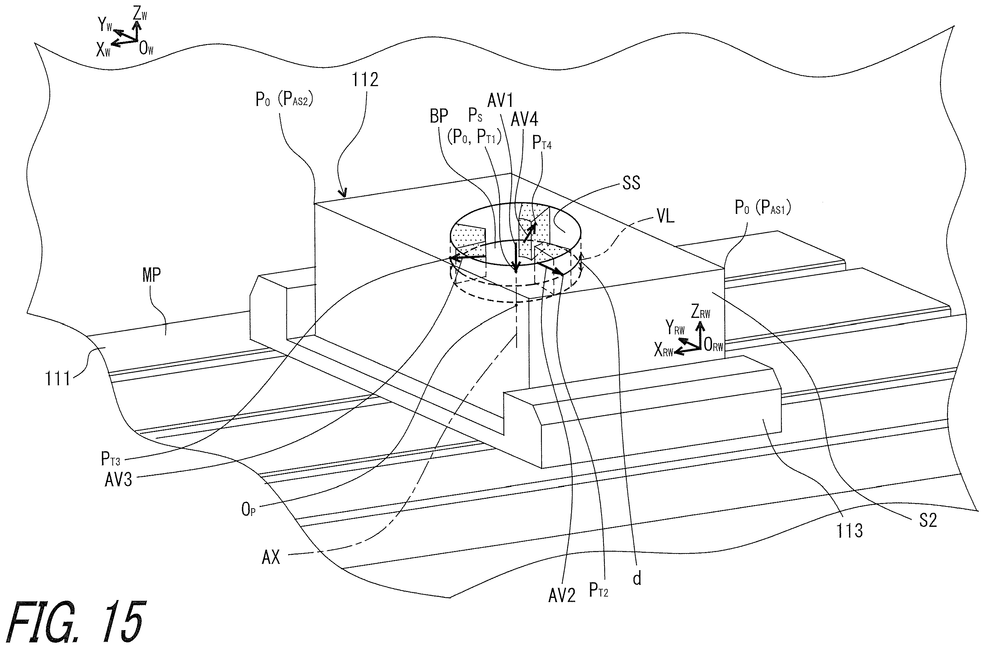

The computer COM executing the measurement point setting program 102 sets a travel model for moving the tip of the probe 19 to obtain the 3D position of at least one option point $P_O$. A window 460 in FIG. 7 is an example of a GUI for inputting the travel model. The GUI includes, for example, radio buttons 461 to 464. At least one of the radio buttons 461 to 464 may be omitted, and a radio button for setting another travel model not shown in the radio buttons 461 to 464 may be added. The radio button 461 is a button for setting a model in which the vertex of the polyhedron workpiece W is set as at least one option point $P_O$. The radio button 462 is a button for setting a model in which the corner of the rectangular groove shown in FIG. 13 is set as at least one option point $P_O$. The radio button 463 is a button for setting a model in which the center of the upper bottom surface of the cylinder shown in FIG. 14 is set as at least one option point $P_O$. The radio button 464 is a button for setting a model in which the center of the bottom surface of the circular groove shown in FIG. 15 is set as at least one option point $P_O$. The following description will be made mainly on the case where the radio button 461 is selected, and the case where the radio buttons 462 to 464 are selected will be described later.

When the radio buttons 461 and 463 are selected, the computer COM executing the measurement point setting program 102 extracts, as the reference plane BP, a plane farthest from the mounting surface MB of the fixture 18 among the planes represented by the boundary representation of the second 3D model 112. Whether or not the surface is a plane can be determined from the equation of the surface or the like. When the radio button 461 is selected, the distance between the mounting surface MB and the plane is determined by the distance between a point indicated by the average value of the world coordinates of the vertices included in the plane and the mounting surface MB represented by the equation of the plane of the world coordinate system. Whether or not the plane is a polygon can be determined by determining whether or not a contour line connecting edges from the boundary representation of the second 3D model 112 constitutes a polygon. When the radio button 463 is selected, the distance between the mounting surface MB and the plane is determined by the distance between the center of the circular plane and the mounting surface MB expressed by the equation of the plane of the world coordinate system. Whether or not the plane is circular can be determined by determining whether or not the contour line connecting the edges from the boundary representation of the second 3D model 112 constitutes a circle.

When the radio button 462 is selected, the computer COM executing the measurement point setting program 102 extracts a plane in which a contour line connecting edges forms a polygon from the boundary representation of the second 3D model 112. Then, the computer COM determines whether or not the half-line extending from the vertex on the edge in the direction along the normal vector of the surface contacting the plane collides with the second 3D model 112. In the case of collision, the plane is considered to be a plane included in the concave portion. Furthermore, the computer COM determines whether or not a collision with the second 3D model 112 occurs when a half line extending from the center of a plane represented by the boundary representation of the second 3D model 112 (for example, a point represented by the average value of the world coordinates of each vertex) in the direction along the normal vector of the plane is considered. When the two surfaces do not collide, it is understood that the plane constituting the polygon is the plane constituting the bottom surface of the concave portion. When there are a plurality of polygonal planes constituting the bottom surface of the recess extracted as described above, the computer COM extracts, as the reference plane BP, a plane farthest from the mounting surface MB of the fixture 18 among the plurality of surfaces by the algorithm described above.

When the radio button 464 is selected, the computer COM executing the measurement point setting program 102 extracts a plane in which a contour line connecting edges forms a circle from the boundary representation of the second 3D model 112. Then, the computer COM determines whether or not the semi-straight line extending from the vertex on the circular edge in the direction along the normal vector of the surface contacting the plane collides with the second 3D model 112. In the case of collision, the plane is considered to be a plane included in the concave portion. Furthermore, the computer COM determines whether or not the semi-straight line extending from the center of the circle represented by the boundary representation of the second 3D model 112 in the direction along the normal vector of the plane collides with the second 3D model 112. When the two surfaces do not collide, it is understood that the plane constituting the circle is the plane constituting the bottom surface of the concave portion. When there are a plurality of circular planes constituting the bottom surface of the recess extracted as described above, the computer COM extracts a plane farthest from the mounting surface MB of the fixture 18 among the plurality of surfaces as the reference plane BP by the algorithm described above.

When the radio buttons 461 and 462 are selected, the computer COM executing the measurement point setting program 102 can obtain a vertex included in the boundary representation of the reference plane BP as at least one option point $P_O$. When the radio buttons 463 and 464 are selected, the computer COM executing the measurement point setting program 102 can determine the center of a circle defined by the edges of the boundary representation of the reference plane BP as at least one option point $P_O$.

Next, the computer COM executing the measurement point setting program 102 can obtain the position of at least one option point $P_O$ in the 3D virtual space VS based on the first to third 3D models 111 to 113 and the parameters indicating the positions and orientations thereof. The position of the at least one option point $P_O$ in the 3D virtual space VS is the world coordinate of the at least one option point $P_O$. The world coordinates of the at least one option point $P_O$ can be obtained from the local coordinates of the at least one option point $P_O$ represented by the local coordinate system $O_{RW}$-$X_{RW}$-$Y_{RW}$$Z_{RW}$ of the second 3D model 112 and the homogeneous transformation matrix that transforms the local coordinate system $O_{RW}$-$X_{RW}Y_{RW}Z_{RW}$ of the second 3D model 112 into the world coordinate system $O_W$-$X_WY_WZ_W$ and the local coordinate system $O_{RW}$-$X_{RW}Y_{RW}Z_{RW}$ of the second 3D model into the world coordinate system $O_W$-$X_WY_WZ_W$. However, as shown in FIGS. 5 and 6, the position and orientation of the second 3D model 112 are determined based on the relative position and orientation of the first 3D model 111 and the third 3D model 113. Therefore, it can be said that the position of at least one option point $P_O$ in the 3D virtual space VS is also obtained based on the first 3D model 111 and the third 3D model 113. Preferably, the local coordinates of the at least one option point $P_O$, represented by the local coordinate system $O_{RW}$-$X_{RW}Y_{RW}Z_{RW}$ of the second 3D model 112, are stored in the storage device or stored in a form externally referred to the boundary representation of the points of the second 3D model 112. Thus, when the position and orientation of the second 3D model 112 are changed, the world coordinates of at least one option point $P_O$ can be obtained from the homogeneous transformation matrix based on the changed position and orientation of the second 3D model 112.

A computer COM which executes a measurement point setting program 102 displays first to third 3D models 111 to 113, one selected point $P_S$ of at least one option point $P_O$, and a program zero $O_P$ on a display DIS in a 3D virtual space VS. The PC monitor 90 and the CNC monitor 50 in FIG. 1 display the first to third 3D models 111 to 113 and a view VSV of the 3D virtual space VS including the selected point $P_S$. When the display DIS visually displays the output of the computer COM, the computer COM may transmit to the display DIS a video signal of computer graphics relating to the view VSV of the 3D virtual space VS.

When the computer COM is the graphics processing computer 60 and the display DIS is the CNC monitor 50, (1) the CNC monitor 50 can also receive the video signals of the graphics processing computer 60 and may visually display the output of the graphics processing computer 60. Alternatively, (2) the control computer 20 may execute screen sharing with the graphics processing computer 60 by a screen sharing application such as a remote desktop, and the control computer 20 may transmit a computer graphics screen of the 3D virtual space VS generated by the graphics processing computer 60 to the CNC monitor 50. Alternatively, (3) the graphics processing computer 60 may transmit part or all of the information for generating the 3D virtual space VS to the control computer 20, and the control computer 20 may generate the view VSV of the 3D virtual space VS from the received information. When the CNC monitor 50 is caused to display the view VSV of the 3D virtual space VS, it is preferable that the GUI of FIGS. 5 and 6 is also displayed together with the display of the 3D virtual space VS or in a mode selectable from the view VSV of the 3D virtual space VS. This allows the operator who performs the setup work to accurately grasp the setting of the fixture 18.

Next, the computer COM executing the measurement point setting program 102 selects one selected point $P_S$ from at least one option point $P_O$. The computer COM selects a point closest to the program zero $O_P$ among at least one option point $P_O$ as the initial value of the selected point $P_S$. When there is only one option point $P_O$, the computer COM selects the option point $P_O$ as the selected point $P_S$. In the example shown in FIG. 4, an example of such a selected point $P_S$ and at least one option point $P_O$ is shown. FIG. 1 shows an example in which the selected point $P_S$ shown in FIG. 4 is displayed in the view VSV of the 3D virtual space VS. The computer COM executing the measurement point setting program 102 displays the window 470 of FIG. 7 adjacent to the view VSV of the 3D virtual space VS. The window 470 includes a world coordinate (machine coordinate) 471 of the selected point $P_S$ and a change button 472. When the user wants to change the selected point $P_S$, the selected point $P_S$ can be switched in order by pressing the change button 472. The change button 472 is an example of a GUI, and another GUI may be used. A computer COM which executes a measurement point setting program 102 receives an input for selecting one selected point $P_S$ from at least one option point $P_O$, and selects one selected point $P_S$ from at least one option point $P_O$ based on the input. A computer COM which executes a measurement point setting program 102 displays first to third 3D models 111 to 113, one selected point PS out of at least one option point $P_O$, and a program zero $O_P$ in a 3D virtual space VS on a display DIS in such a manner that the selected point $P_S$ and the program zero $O_P$ can be distinguished from the first to third 3D models 111 to 113. For example, the computer COM causes the display DIS to display a spherical object centered on the selected point $P_S$ and a spherical object centered on the program zero $O_P$.

Referring back to FIG. 2, the storage devices (memory 32 and memory 72) store the probe travel plan generation program 103. The probe travel plan generation program 103 is a program for determining a travel plan of the probe 19 for obtaining a 3D position (e.g., machine coordinates) of the selected point $P_S$ in the real space. The probe 19 is attached to the processing head 12 as shown in FIG. 8. The probe travel plan generation program 103 may receive the position of the selected point $P_S$ in the 3D virtual space VS (world coordinates), the second 3D model 112, and the position and orientation (for example, homogeneous transformation matrix) of the second 3D model 112 from the measurement point setting program 102, and execute the processing described below. Alternatively, the probe travel plan generation program 103 may be a library called by the measurement point setting program 102.

The computer COM that executes the probe travel plan generation program 103 selects one selected point PS from at least one option point $P_O$ by receiving information on the selected point $P_S$ from the measurement point setting program 102, for example. The computer COM which executes the probe travel plan generation program 103 is, for example, configured to read the setting of the window 460 in FIG. 7, and set the moving model for moving a tip 19E of the probe 19 of obtaining the 3D position (for example, machine coordinate) of the selected point $P_S$. The probe 19 has a spherical touch sensor attached to the tip 19E thereof. The probe 19 is moved such that the center $P_E$ of the spherical touch approach the target position of the workpiece. For the following description, the radius of the spherical touch sensor is represented by ROFF. Therefore, the computer COM which executes the probe travel plan generation program 103 sets the travel model for determining the optimum target position and the travel direction AV1 based on the peripheral shape of the selected point $P_S$ which is known from the second 3D model 112.

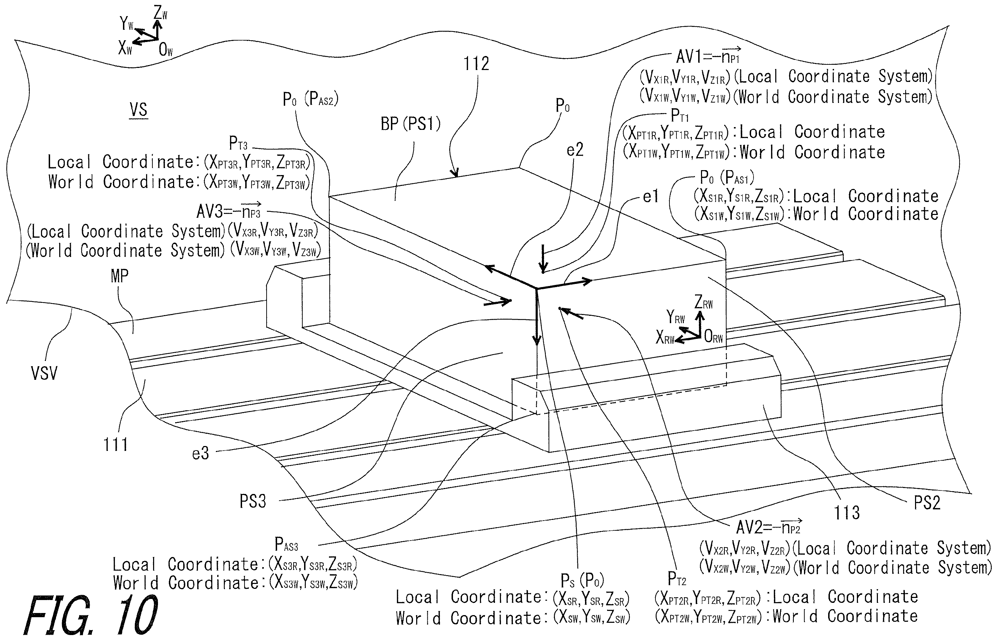

The travel model is set based on the radio buttons 461 to 464 in FIG. 7. For example, when the radio button 461 is selected, as shown in FIG. 10, a travel model is set in which the probe 19 is applied perpendicularly to three intersecting planes constituting the vertex of the selected point $P_S$. When the radio button 462 is selected, as shown in FIG. 13, a travel model is set in which the probe 19 is applied perpendicularly to three intersecting planes constituting the vertex of the selected point $P_S$ of the rectangular groove. When the radio button 463 is selected, as shown in FIG. 14, a travel model is set which includes a locus in which the probe 19 is applied perpendicularly to the upper bottom surface of the circle having the selected point $P_S$ as the center and a locus in which the probe 19 is applied in three directions to the side surface adjacent to the upper bottom surface. When the radio button 463 is selected, as shown in FIG. 15, a travel model is set which includes a locus in which the probe 19 is applied perpendicularly to a circular bottom surface having the selected point PS in the circular groove as a center and a locus in which the probe 19 is applied in three directions to a side surface adjacent to the bottom surface. The following processing will be described in detail with respect to the processing when the radio button 461 is selected, and the difference between the other travel models and the processing when the radio button 461 is selected will be briefly described.

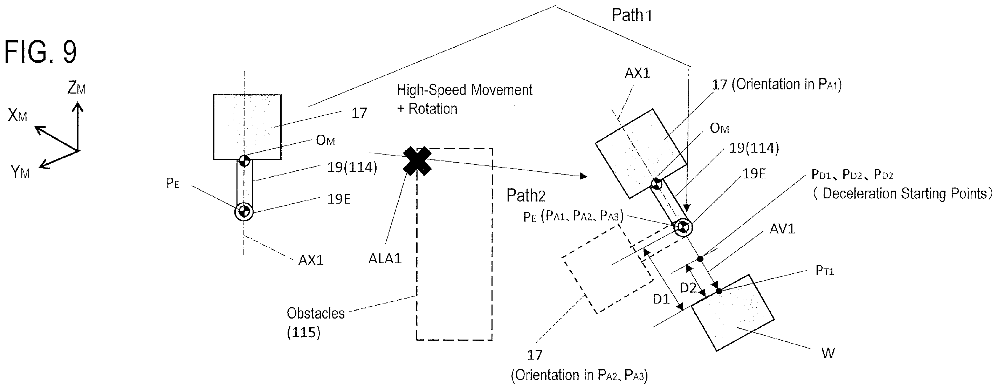

The computer COM executing the probe travel plan generation program generates travel plan including travel directions AV1 to AV3 (or AV1 to AV4) and travel speeds MV1 to MV3 (or MV1 to MV4) when the probe 19 is moved toward each of at least three travel plans $P_{T1}$ to $P_{T3}$ (or $P_{T1}$ to $P_{T4}$) on the surface of the workpiece W to obtain a 3D position (e.g., machine coordinates) of the selected point $P_S$ in real space based on the 3D shape of the travel plan of the selected point $P_S$ and the second 3D model. FIG. 9 is a schematic diagram of a virtual space for determining the travel plan. FIG. 10 shows a method of determining the travel model in the case where a vertex where three or more planes intersect is set as the selected point $P_S$.

First, the computer COM executing the probe travel plan generation program extracts three planes forming the selected point $P_S$. More specifically, the computer COM that executes the probe travel plan generation program extracts boundary representations of respective planes of the second 3D model 112, which include the selected point $P_S$ as an element. In FIG. 10, the plane defined by the boundary representation thus extracted is shown as the first plane PS1, the second plane PS2, and the third plane PS3. The first plane PS1 is a reference plane BP. Next, the computer COM which executes the probe travel plan generation program 103 obtains each of normal vectors $\overrightarrow{n_{P1}}, \overrightarrow{n_{P2}}, \overrightarrow{n_{P3}}$ of the first plane PS1 (reference plane BP), the second plane PS2, and the third plane PS3 from the boundary representation. These normal vectors are typically represented in the local coordinate system $O_{RW}$-$X_{RW}Y_{RW}Z_{RW}$ of the second 3D model 112.

Next, the computer COM executing the probe travel plan generation program 103 determines a first travel direction AV1, a second travel direction AV2, and a third travel direction AV3 for moving the tip 19E of the probe 19 toward the first plane PS1, the second plane PS2, and the third plane PS3 based on the normal vector obtained previously. In the technical field of 3D graphics, a normal vector $\overrightarrow{n_{P1}}, \overrightarrow{n_{P2}}, \overrightarrow{n_{P3}}$ defined by a boundary representation is defined as the vector pointing out of the 3D object. Therefore, the computer COM which executes the probe travel plan generation program 103 defines vectors in the direction opposite to the normal vectors of the first plane PS1 (reference plane BP), the second plane PS2, and the third plane PS3, as the first travel direction AV1, the second travel direction AV2, and the third travel direction AV3. The vectors of the first travel direction AV1, the second travel direction AV2, and the third travel direction AV3, which are expressed in the local coordinate system $O_{RW}$-$X_{RW}Y_{RW}Z_{RW}$ of the second 3D model 112 are respectively represented as $(V_{X1R}, V_{Y1R}, V_{Z1R})$ $(V_{X2R}, V_{Y2R}, V_{Z2R})$ $(V_{X3R}, V_{Y3R}, V_{Z3R})$. It is preferable that the vectors of the first travel direction AV1, the second travel direction AV2, and the third travel direction AV3, which are expressed in the local coordinate system $O_{RW}$-$X_{RW}Y_{RW}Z_{RW}$, are stored in the storage device. Thus, when the position and orientation of the second 3D model 112 are changed, the world coordinate system vectors of the first travel direction AV1, the second travel direction AV2, and the third travel direction AV3 can be obtained from the homogeneous transformation matrix based on the changed position and orientation of the second 3D model 112 and the stored vector represented by the local coordinate system. When the vectors of the first travel direction AV1, the second travel direction AV2, and the third travel direction AV3 expressed in the local coordinate system $O_{RW}$-$X_{RW}Y_{RW}Z_{RW}$ are obtained, the computer COM executing the probe travel plan generation program 103 uses the homogeneous transformation matrix to obtain the vectors of the first travel direction AV1, the second travel direction AV2, and the third travel direction AV3 expressed in the world coordinate system.

Next, the computer COM executing the probe travel plan generation program 103 obtains the vertices $P_{AS1}$, $P_{AS2}$, and $P_{AS3}$ adjacent to the selected point Ps from the boundary representation. To obtain this, the computer COM may first obtain three edges passing through the selected point Ps based on the boundary representation of the second 3D model 112, and obtain other vertices $P_{AS1}$, $P_{AS2}$, and $P_{AS3}$ shared by these edges and the selected point Ps. Then, the computer COM calculates, based on the local coordinates of the vertices $P_{AS1}$, $P_{AS2}$, and $P_{AS3}$ expressed in the local coordinate system $O_{RW}$-$X_{RW}Y_{RW}Z_{RW}$, namely $(X_{S1R}, Y_{S1R}, Z_{S1R})$, $(X_{S2R}, Y_{S2R}, Z_{S2R})$, and $(X_{S3R}, Y_{S3R}, Z_{S3R})$, and the local coordinates of the selected point Ps expressed in the same local coordinate system, namely $(X_{SR}, Y_{SR}, Z_{SR})$, the first vector from PS to $P_{AS1}$ as ($X_{S1R}$ - $X_{SR}$, $Y_{S1R}$ - $Y_{SR}$, $Z_{S1R}$ - $Z_{SR}$), the second vector from Ps to $P_{AS2}$ as ($X_{S2R}$ - $Y_{SR}$, $Z_{S2R}$ - $Z_{SR}$), and the third vector from Ps to PAS3 as ($X_{S3R}$ - $X_{SR}$, $Y_{S3R}$ - $Y_{SR}$, $Z_{S3R}$ - $Z_{SR}$). Then, the computer COM obtains a first normalized vector e1 obtained by normalizing the first vector, a second normalized vector e2 obtained by normalizing the second vector, and a third normalized vector e3 obtained by normalizing the third vector.

Then, the computer COM executing the probe travel plan generation program 103 determines the local coordinates ($X_{PT1R}$, $Y_{PT1R}$, $Z_{PT1R}$) ($X_{PT2R}$, $Y_{PT2R}$, $Z_{PT2R}$) ($X_{PT3R}$, $Y_{PT3R}$, $Z_{PT3R}$) of the target destinations $P_{T1}$ to $P_{T3}$ based on the following equation.

[Equation 8]

$$\overrightarrow{P_S P_{T1}} = \begin{pmatrix} X_{PT1R} - X_{SR} \\ Y_{PT1R} - Y_{SR} \\ Z_{PT1R} - Z_{SR} \end{pmatrix} = k_1 \overrightarrow{e_1} + k_1 \overrightarrow{e_2}$$

[Equation 9]

$$\overrightarrow{P_S P_{T2}} = \begin{pmatrix} X_{PT2R} - X_{SR} \\ Y_{PT2R} - Y_{SR} \\ Z_{PT2R} - Z_{SR} \end{pmatrix} = k_1 \overrightarrow{e_1} + k_2 \overrightarrow{e_3}$$

[Equation 10]

$$\overrightarrow{P_S P_{T3}} = \begin{pmatrix} X_{PT3R} - X_{SR} \\ Y_{PT3R} - Y_{SR} \\ Z_{PT3R} - Z_{SR} \end{pmatrix} = k_1 \overrightarrow{e_2} + k_2 \overrightarrow{e_3}$$

The coefficients k1 and k2 may be set in advance from experience and stored in the storage device, and the computer COM executing the probe travel plan generation program 103 may generate a GUI for receiving at least one of the inputs of k1 and k2 from the user as shown in the window 480 of FIG. 7 and set k1 and k2 based on the input. The window 480 includes text boxes 481 and 482 for inputting the numerical values of k1 and k2. It is desirable that the local coordinates of the target destinations $P_{T1}$ to $P_{T3}$ thus obtained, which are expressed by the local coordinate systems $O_{RW}$-$X_{R}$-$_{W}Y_{RW}Z_{RW}$, are stored in the storage device. Thus, when the position and orientation of the second 3D model 112 are changed, the world coordinates of the target destinations $P_{T1}$ to $P_{T3}$ can be obtained from the homogeneous transformation matrix based on the changed position and orientation of the second 3D model 112 and the local coordinates of the target destinations $P_{T1}$ to $P_{T3}$.

When the local coordinates of the target destinations $P_{T1}$ to $P_{T3}$ are obtained, the computer COM executing the probe travel plan generation program 103 obtains the world coordinates of the target destinations $P_{T1}$ to $P_{T3}$ based on the homogeneous transformation matrix. The computer COM may display the world coordinates 483 of the determined target destination $P_{T1}$, the world coordinates 484 of the determined target destination $P_{T2}$, and the world coordinates 485 of the determined target destination $P_{T3}$ in the window 480. Next, the computer COM determines the local coordinates ($X_{A1R}$, $Y_{A1R}$, $Z_{A1R}$) ($X_{A2R}$, $Y_{A2R}$, $Z_{A2R}$) ($X_{A3R}$, $Y_{A3R}$, $Z_{A3R}$) of the approach start points $P_{A1}$ to $P_{A3}$ for starting to move the center PE of the touch sensor of the probe 19 in the first travel direction AV1, the second travel direction AV2, and the third travel direction AV3 toward the target destinations $P_{T1}$ to $P_{T3}$, based on the following formula.

[Equation 11]

$$\overrightarrow{P_{T1} P_{A1}} = \begin{pmatrix} X_{A1R} - X_{PT1R} \\ Y_{A1R} - Y_{PT1R} \\ Z_{A1R} - Z_{PT1R} \end{pmatrix} = D_1 \frac{\overrightarrow{n_1}}{|\overrightarrow{n_1}|}$$

[Equation 12]

$$\overrightarrow{P_{T2}\,P_{A2}} = \begin{pmatrix} X_{A2R} - X_{PT2R} \\ Y_{A2R} - Y_{PT2R} \\ Z_{A2R} - Z_{PT2R} \end{pmatrix} = D_1 \frac{\overrightarrow{n_2}}{|\overrightarrow{n_2}|}$$

[Equation 13]

$$\overrightarrow{P_{T3}\,P_{A3}} = \begin{pmatrix} X_{A3R} - X_{PT3R} \\ Y_{A3R} - Y_{PT3R} \\ Z_{A3R} - Z_{PT3R} \end{pmatrix} = D_1 \frac{\overrightarrow{n_3}}{|\overrightarrow{n_3}|}$$

The coefficient D1 may be set in advance from experience and stored in the storage device, and the computer COM executing the probe travel plan generation program may generate a GUI for receiving an input from the user and set D1 based on the input. It is preferable the local coordinates represented by the local coordinate system $O_{RW}$-$X_{RW}Y_{RW}Z_{RW}$ of the approach start point $P_{A1}$ - $P_{A3}$ as determined in this way are stored in the storage device. Thus, when the position and orientation of the second 3D model 112 are changed, the world coordinates of the approach start points $P_{A1}$ - $P_{A3}$ can be obtained based on the changed position and orientation of the second 3D model 112 and the local coordinates of the approach start points $P_{A1}$ to $P_{A3}$. When the local coordinates of the approach start points $P_{A1}$ to $P_{A3}$ are obtained, the computer COM executing the probe travel plan generation program 103 obtains the world coordinates of the approach start points $P_{A1}$ to $P_{A3}$ based on the homogeneous transformation matrix.

Next, the computer CO sets the center PE of the touch sensor of the probe 19 to the target destinations $P_{T1}$ to $P_{T3}$ and determines the local coordinates $(X_{D1R},\ Y_{D1R},\ Z_{D1R})\ (X_{D2R},\ Y_{D2R},\ Z_{D2R})\ (X_{D3R},\ Y_{D3R},\ Z_{D3R})$ of deceleration start points $P_{D1}$ to $P_{D3}$, which start deceleration during movement in the first travel direction AV1, the second travel direction AV2, and the third travel direction AV3, based on the following equation.

[Equation 14]

$$\overrightarrow{P_{T1}\,P_{D1}} = \begin{pmatrix} X_{D1R} - X_{PT1R} \\ Y_{D1R} - Y_{PT1R} \\ Z_{D1R} - Z_{PT1R} \end{pmatrix} = D_2 \frac{\overrightarrow{n_1}}{|\overrightarrow{n_1}|}$$

[Equation 15]

$$\overrightarrow{P_{T2}\,P_{D2}} = \begin{pmatrix} X_{D2R} - X_{PT2R} \\ Y_{D2R} - Y_{PT2R} \\ Z_{D2R} - Z_{PT2R} \end{pmatrix} = D_2 \frac{\overrightarrow{n_2}}{|\overrightarrow{n_2}|}$$

[Equation 16]

$$\overrightarrow{P_{T3}\,P_{D3}} = \begin{pmatrix} X_{D3R} - X_{PT3R} \\ Y_{D3R} - Y_{PT3R} \\ Z_{D3R} - Z_{PT3R} \end{pmatrix} = D_2 \frac{\overrightarrow{n_3}}{|\overrightarrow{n_3}|}$$

The coefficient $D_2$ may be empirically determined based on the tolerance of the workpiece W or the radius ROFF of the touch sensor. It is desirable that the local coordinates of the deceleration start points $P_{D1}$ to $P_{D3}$ thus obtained, which are expressed by the local coordinate system $O_{RW}$-$X_{RW}Y_{RW}Z_{RW}$, are stored in the storage device. Thus, when the position and orientation of the second 3D model 112 are changed, the world coordinates of the deceleration start points $P_{D1}$ to $P_{D3}$ can be obtained from the homogeneous transformation matrix based on the changed position and orientation of the second 3D model 112 and the local coordinates of the deceleration start points $P_{D1}$ to $P_{D3}$. When the local coordinates of the deceleration start points $P_{D1}$ to $P_{D3}$ are obtained, the computer COM executing the probe travel plan generation program 103 obtains the world coordinates of the deceleration start points $P_{D1}$ to $P_{D3}$ based on the homogeneous transformation matrix.

Next, the computer COM generates the remaining travel plan of the probe 19. FIG. 9 is a schematic diagram showing the travel plan toward the target destinations $P_{T1}$ to $P_{T3}$. The computer COM generates a travel plan that moves the spindle 12b from its return-to-origin position until the center $P_E$ of the probe tip 19E of the probe 19 reaches each of the approach start points $P_{A1}$ to $P_{A3}$. To realize this, the computer COM may generate a travel plan for moving the spindle 12b at high speed in the $X_W$-axis direction and the $Y_W$-axis direction so that the center PE of the tip 19E of the probe 19 moves to the $X_W$-coordinate in the world coordinate system of the approach start points $P_{A1}$ to $P_{A3}$ (corresponding to the $X_M$-coordinate in the machine coordinate system $O_M$-$X_M Y_M Z_M$ in real space) and the $Y_W$-coordinate in the world coordinate system of the approach start points $P_{A1}$ to $P_{A3}$ (corresponding to the $Y_M$-coordinate in the machine coordinate system in real space). Next, the computer COM may generate a travel plan for moving the spindle 12b at a high speed in the $Z_W$ axis direction so that the center PE of the tip 19E of the probe 19 moves to the $Z_M$ coordinates of the approach start points $P_{A1}$ to $P_{A3}$ in the world coordinate system (corresponding to the $Z_M$ coordinates in the machine coordinate system in the real space) (the above is path 1). When the travel plan is generated in this way, the risk of the probe 19 interfering with other obstacles can be reduced. Alternatively, the computer COM may move the spindle 12b linearly from the origin return position to the position of the approach start points $P_{A1}$ to $P_{A3}$ (the above is path 2).

When the spindle 12b is moved until the position of the center $P_E$ of the tip $19_E$ of the probe 19 becomes the approach start point $P_{A1}$, the spindle 12b is directed so that the center axis (rotation axis AX1) of the probe 19 becomes parallel to the travel direction AV1. When the spindle 12b is moved until the position of the center $P_E$ of the tip 19E of the probe 19 becomes the approach start point PA1, the spindle 12b is directed so that the center axis (rotation axis (AX1)) of the probe 19 becomes parallel to the travel direction AV1 (travel direction AV2, perpendicular to AV2). In many cases, the position and orientation of the workpiece W are adjusted so that the reference plane BP is perpendicular to the $Z_M$ axis of the machine coordinate system, and the orientation of the probe 19 is not adjusted.

Next, the computer COM generates a procedure for moving the spindle 12b in the travel direction AV1 toward the target destinations $P_{T1}$ to $P_{T3}$. At this time, the travel speed of the probe 19 when the distance between the tip 19E and the target destinations $P_{T1}$-$P_{T3}$ is within a predetermined threshold value (that is, the tip 19E is between the deceleration starting points $P_{D1}$-$P_{D3}$) and the target destinations $P_{T1}$-$P_{T3}$ is set to be smaller than the travel speed of the probe 19 when the distance between the tip 19E and the target destination $P_{T1}$ is equal to or greater than a predetermined threshold value (that is, the tip 19E) is between the approach starting points $P_{A1}$-$P_{A3}$ and the deceleration starting points $P_{D1}$-$P_{D3}$. The predetermined threshold value may be determined based on the tolerance of the workpiece W and the radius ROFF of the touch sensor. In this way, the computer COM generates the travel plan for moving the center PE of the tip 19E of the probe 19 toward the target destinations $P_{T1}$ to $P_{T3}$.

Next, the computer COM which executes the probe travel plan generation program displays, on the display DIS, information indicating the peripheral region of the proximity locus within a threshold distance from each of the at least three target destinations $P_{T1}$-$P_{T3}$ or $P_{T1}$-$P_{T4}$ among the locus which move toward the travel directions $A_{V1}$-$A_{V3}$ or $A_{V1}$-$A_{V4}$ toward each of the at least three target destinations $P_{T1}$-$P_{T3}$ or $P_{T1}$-$P_{T4}$. The threshold distance is preferably set to be equal to or greater than $D_2$ and equal to or less than $D_1$.

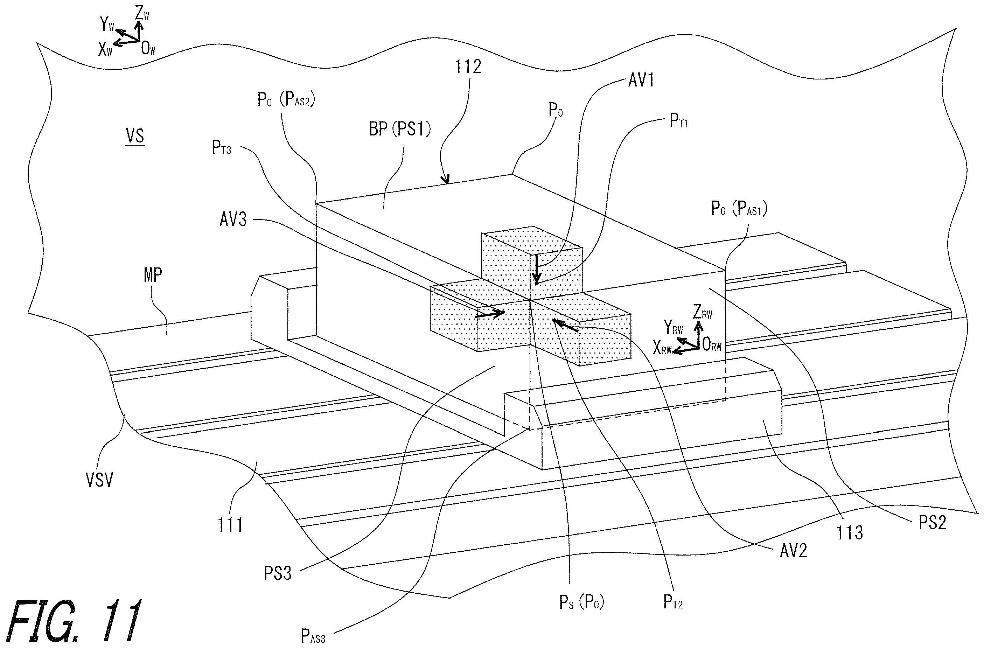

FIG. 11 is a display example of the view VSV in which the peripheral area is highlighted in the 3D virtual space VS in the example of FIG. 9. In FIG. 11, the highlighted region is indicated by hatching. Although FIG. 11 shows an example in which a rectangular parallelepiped having the proximity locus as the center is used as the peripheral region, a cylinder having the proximity locus as the center may be used as the peripheral region. Although FIG. 11 shows arrows indicating the travel directions AV1 to AV3 and points indicating at least three target destinations $P_{T1}$ to $P_{T3}$, these displays may be omitted. In this case, it is preferable that the computer COM executing the probe travel plan generation program 103 displays the view VSV in which the display of the arrows indicating the travel directions AV1 to AV3 and the points indicating at least three target destinations $P_{T1}$ to $P_{T3}$ in FIG. 11 is omitted, the view VSV in which at least three target destinations $P_{T1}$ to $P_{T3}$ or $P_{T1}$ to $P_{T4}$ and the travel directions AV1 to AV3 or AV1 to AV4 are added to the view VSV of the 3D virtual space VS shown in FIG. 1, and the view VSV shown in FIG. 1 in a switchable manner.

Referring back to FIG. 2, the storage devices (memory 32 and memory 72) store the movement simulation program 104. The movement simulation program 104 is executed when a known GUI such as the simulation execution button 491 shown in FIG. 7 is operated, and is used to determine whether the probe 19 is interfered with by an object other than the workpiece W when the probe 19 is moved according to the travel plan generated by the probe travel plan generation program 103, and whether the operation range of the probe 19 belongs to the movable range of the probe 19.

To achieve this, the computer COM executing the movement simulation program 104 prepares a fourth 3D model 114 that reproduces the probe 19 and another 3D model 115 that reproduces the range of motion of the probe 19 and other obstacles that may be placed therein. The fourth 3D model 114 may include a 3D model of the machining head 12 and the tool holder 17. The dimensions of the fourth 3D model 114 and the other 3D models 115 are determined so that the unit of the local coordinate system of the fourth 3D model 114 and the unit of the local coordinate system of the other 3D models 115 are the same as the unit (unit of real space, e.g., mm) of the probe 19, the range of motion, and the obstacle in the mechanical coordinate system $O_M$-$X_M Y_M Z_M$. Since the position and direction of the mechanical coordinate system $O_M$-$X_M Y_M Z_M$ is fixed, the probe 19 may not have a local coordinate system. The fourth 3D model 114 and the other 3D model 115 are stored in the storage device. By preparing the 3D model of the range of motion, the computer COM executing the movement simulation program 104 sets the range of motion of the probe 19 in the 3D virtual space VS.

The computer COM for executing the movement simulation program 104 controls the tip 19E of the probe 19 to move in at least three travel directions AV1 to AV3 and to set target destinations $P_{T1}$ to $P_{T3}$ corresponding to the three travel directions AV1 to AV3 when the object is moved toward the object in accordance with the travel plan , it is determined whether or not an interference state in which the fourth 3D model 114 and the 3D models 111, 113, and 115 other than the fourth 3D model 114 are in contact with each other occurs. This determination can be made using a well-known technique of computer graphics collision determination. The computer COM displays, on a display DIS, first to fourth 3D models 111 to 114 (and other 3D models (115)), at least three travel directions AV1 to AV3, target destinations $P_{T1}$ to $P_{T3}$ corresponding to the travel directions, and the presence or absence of an interference state in a 3D virtual space VS.

For example, the computer COM may display an image in which a schematic diagram as shown in FIG. 9 is displayed in 3D graphics on the display DIS. In FIG. 9, it is assumed that the probe 19 does not contact the obstacle 115 when it is moved as in the path 1, but contacts the obstacle 115 when it is moved as in the path 2. At this time, the computer COM may display an alarm ALA1 at a place where the fourth 3D model 114 and the 3D models 111, 113, and 115 other than the fourth 3D model 114 are in contact with each other. The computer COM may also notify the user of the warning by text or sound.

Next, the computer COM determines whether the operation range of the probe 19 according to the travel plan belongs to the movable range. This may include, for example, a planar 3D model BD in which the 3D model of the range of motion of the probe 19 (e.g., other 3D model 115) surrounds the outer edge of the range of motion, and the computer COM may determine whether the fourth 3D model 114 intersects the 3D model BD of the outer edge of the range of motion using well-known computer graphics intersection determination techniques. The computer COM displays, on a display DIS, information for identifying whether or not the range of motion belongs to the range of motion, in addition to first to fourth 3D models 111 to 114, at least three travel directions AV1 to AV3, and target destinations $P_{T1}$ to $P_{T3}$ in a 3D virtual space VS.

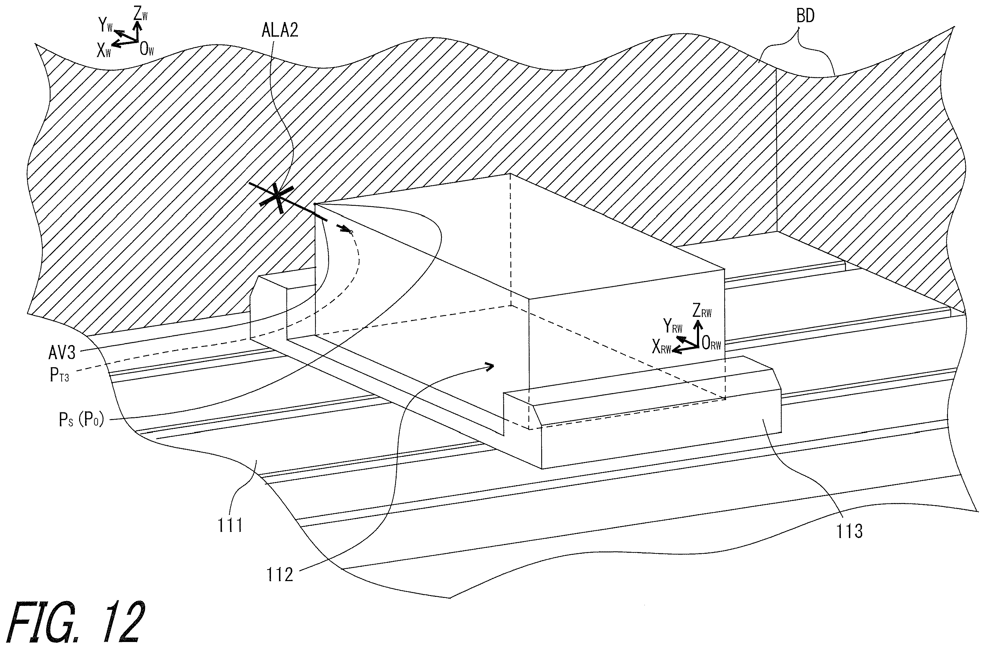

For example, the computer COM may cause the display DIS to display 3D graphics as shown in FIG. 12. In FIG. 12, it is assumed that when the probe 19 is moved in the travel direction AV3 toward the target destination PT3, the probe 19 intersects with the 3D model BD at the outer edge of the movable range. At this time, the computer COM may display an alarm ALA2 at a place where the fourth 3D model 114 intersects with the 3D model BD at the outer edge of the movable range. The computer COM may also notify the user of the warning by text or sound.

The processing executed by the computer COM up to the above may be executed by either the control computer 20 or the graphics processing computer 60. Preferably, when the machining program 101 is generated, at least one option point, the travel plan, and the simulation are performed by the programmer by the graphics processing computer 60, and then the operator performs the setup of the workpiece W, and at the same time, the selected point $P_S$ of the at least one option point is selected. After the selected point $P_S$ is selected by the control computer 20, when a well-known GUI such as the measurement start button 492 in FIG. 7 is operated, the control computer 20 executes the program zero measurement program 105 in FIG. 2. The program zero measurement program 105 is stored in the memory 32 and executed by the processor 31. Note that the program zero measurement program 105 may not be stored in the memory 72 of the graphics processing computer 60, and a well-known GUI such as the measurement start button 492 may not be generated by the graphics processing computer 60.

The control computer 20 (computer COM included in a computer numerical controller of the machine tool 2) which executes the program zero measurement program 105 selected point $P_S$ which is selected when the measurement start button 492 is pressed is determined as a measurement point at which the 3D position in the real space is measured by bringing the probe 19 attachable to the machine tool 2 into contact with the workpiece W. That is, at least one option point $P_O$ includes a measurement point. The control computer 20 moves the probe 19 in accordance with the travel plan of the selected point $P_S$ to measure the 3D position of the measurement point. Although the 3D position is not necessarily expressed by machine coordinates, it is desirable that the 3D position has a certain relationship with machine coordinates and can be converted into machine coordinates.

The control computer 20 determines the machine coordinates of the program zero $O_P$ based on the 3D position and the positional relationship between the measurement point and the program zero $O_P$. As described above, the local coordinates of the measuring point (selected point $P_S$) in the local coordinate system $O_{RW}$-$X_{RW}Y_{RW}Z_{RW}$ and the local coordinates of the program zero $O_P$ in the local coordinate system $O_{RW}$-$X_{RW}Y_{RW}Z_{RW}$ are stored in the memory 32 (storage device) in advance. Accordingly, the relative coordinates (vectors) of the program zero $O_P$ with respect to the measuring point (selected point $P_S$) in the local coordinate system $O_{RW}$-$X_{RW}Y_{RW}Z_{RW}$ are stored in advance in the memory 32 (storage device). The control computer 20 can determine the machine coordinates of the program zero $O_P$ by using the 3D position thus determined, the relative coordinates, and the homogeneous transformation matrix for transforming the local coordinate system $O_{RW}$-$X_{RW}Y_{RW}Z_{RW}$ into the world coordinate system $O_W$-$X_WY_WZ_W$. Further, the control computer 20 sets the correspondence relationship between the work coordinate system $O_P$-$X_PY_PZ_P$ and the machine coordinate system $O_M$-$X_MY_MZ_M$ with the program zero $O_P$ as a reference based on the machine coordinates of the program zero $O_P$.

Although the series of processing in the case where the radio button 461 is selected has been described above, processing which has not been described in the case where the radio buttons 462 to 464 are selected will be described mainly with respect to contents different from those in the case where the radio button 461 is selected. FIG. 13 shows a method of determining the travel model in the case where the radio button 462 is selected and the vertex where three or more planes in the rectangular groove intersect is set as the selected point $P_S$. Referring to FIG. 13, at least one option point $P_O$ is provided at a corner of the circular groove. At least one option point $P_O$ is defined by the Reference plane $B_P$ Boundary representation of the object. In this case, the spindle 12b is also directed so that the central axis (rotation axis AX1) of the probe 19 is perpendicular to the travel direction AV1 when approaching the target destinations $P_{T2}$ and $P_{T3}$.

FIG. 14 shows a method of determining the travel model in the case where the radio button 463 is selected and the center of the upper bottom surface of the circular shape is set as the selected point $P_S$. In this case, since there is only one option point $P_O$, this point is the selected point $P_S$ and is also the measurement point. It is desirable that the program zero $O_P$ exists on the central axis AX of the cylindrical second 3D model 112. The computer COM sets the target destination $P_{T1}$ as a selected point $P_S$ and provides target destinations $P_{T2}$ to $P_{T4}$ on the side surface SS of the curved surface adjacent to the reference plane BP. It is preferable that the target destinations $P_{T2}$ to $P_{T4}$ are provided on the virtual curve VL separated from the reference plane BP by a distance d (corresponding to the above-described k2) and are provided at positions separated from each other by 120 degrees with respect to the central axis AX. In this case, the spindle 12b is also directed so that the central axis (rotation axis AX1) of the probe 19 is perpendicular to the travel direction AV1 when approaching the target destinations $P_{T2}$ to $P_{T4}$. When the machine coordinates of the target destinations $P_{T1}$ to $P_{T4}$ are obtained, the computer COM obtains the barycentric position of a triangle formed by these three points from the machine coordinates of the target destinations $P_{T2}$ to $P_{T4}$, for example. The computer COM can determine the machine coordinates of the program zero Op on the basis of the distance between the target destination $P_{T1}$ and the program zero $O_P$ along the central axis AX, by regarding the position of the center of gravity and the position of the target destination $P_{T1}$ represented by the machine coordinates as the central axis AX of the cylinder passing through the central axis AX.

FIG. 15 shows a method of determining the travel model in the case where the center of the circular bottom surface of the circular groove is set as the selected point $P_S$. In this case, since there is only one option point $P_O$, this point is the selected point $P_S$ and also the measurement point. It is desirable that the program zero Op exists on the central axis AX of the cylindrical second 3D model 112. The computer COM sets the target destination $P_{T1}$ as a selected point $P_S$ and provides target destinations $P_{T2}$ to $P_{T4}$ on the side surface SS of the curved surface adjacent to the reference plane BP. It is preferable that the target destinations $P_{T2}$ to $P_{T4}$ are provided on the virtual curve VL separated from the reference plane BP by a distance d (corresponding to the above-described k2) and are provided at positions separated from each other by 120 degrees with respect to the central axis AX. In this case, the spindle 12b is also directed so that the central axis (rotation axis AX1) of the probe 19 is perpendicular to the travel direction AV1 when approaching the target destinations $P_{T2}$ to $P_{T4}$.

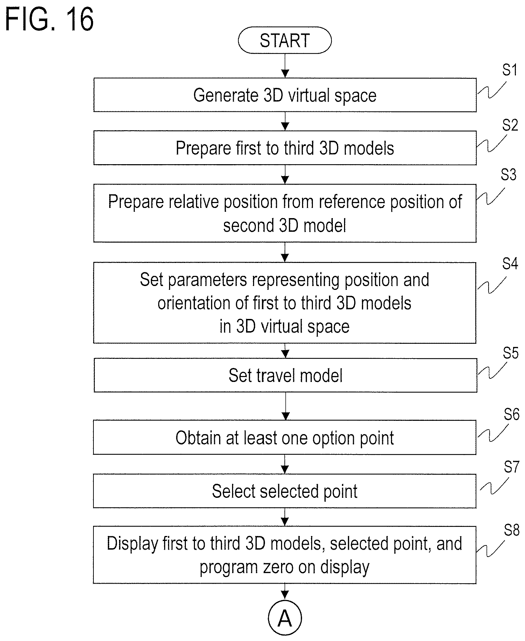

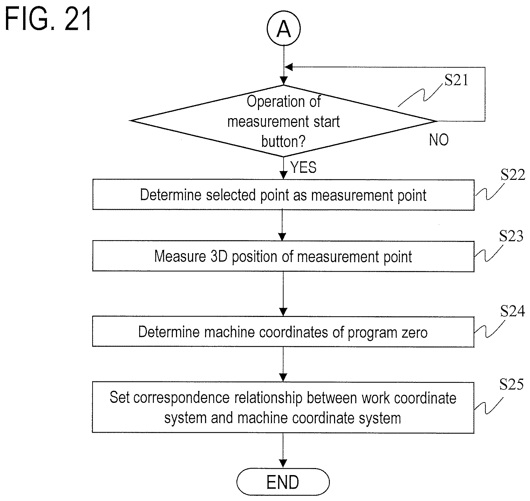

FIGS. 16 to 20 are flowcharts showing the flow of the processing of the measurement point setting program 102, the probe travel plan generation program 103, and the movement simulation program 104 according to the present embodiment. FIG. 21 is a flowchart showing the flow of processing of the program zero measurement program 105 according to the present embodiment. In step S1 of FIG. 16, the computer COM executing the measurement point setting program 102 generates a 3D virtual space VS representing a virtual reality environment. That is, the setting method of the machine tool 2 according to the present embodiment includes causing the computer COM to generate a 3D virtual space VS representing a virtual reality environment.

In step S2 of FIG. 16, the computer COM executing the measurement point setting program 102 prepares first to third 3D models 111 to 113. In step S3 of FIG. 16, the computer COM executing the measurement point setting program 102 prepares a relative position of the program zero $O_P$ in the machining program 101 for machining the workpiece W from the reference position of the second 3D model 112 (for example, local coordinates $(X_{PR}, Y_{PR}, Z_{PR})$ of the program zero $O_P$ represented by the local coordinate system $O_{RW}$-$X_{RW}Y_{RW}Z_{RW}$ of the second 3D model 112. That is, the setting method of the machine tool 2 according to the present embodiment includes making the computer COM prepare the first to third 3D models 111 to 113 and the relative position of the program zero Op from the reference position of the second 3D model 112.

In step S4 of FIG. 16, the computer COM executing the measurement point setting program 102 receives an input relating to the operation of the GUI as shown in FIGS. 5 and 6, for example, and sets parameters representing the position and orientation of each of the first to third 3D models 111 to 113 in the 3D virtual space VS. That is, the setting method of the machine tool 2 according to the present embodiment includes causing the computer COM to set parameters representing the position and orientation of each of the first to third 3D models 111 to 113 in the 3D virtual space VS.

In step S5 of FIG. 16, the computer COM which executes the measurement point setting program 102 sets the travel model by accepting, for example, an input relating to an operation of the window 460 of FIG. 7. The setting method of the machine tool 2 according to the present embodiment includes causing the computer COM to set the travel model. In step S6 of FIG. 16, the computer COM executing the measurement point setting program 102 obtains the position of at least one option point $P_O$ in the 3D virtual space VS based on the relative position of the program zero $O_P$, the first to third 3D models 111 to 113, and the parameter. The setting method of the machine tool 2 according to the present embodiment includes causing the computer COM to obtain the position of at least one option point $P_O$ in the 3D virtual space VS based on the relative position of the program zero $O_P$, the first to third 3D models 111 to 113, and the parameters.

In step S7 of FIG. 16, the computer COM executing the measurement point setting program 102 selects one selected point $P_S$ from at least one option point $P_O$ by, for example, accepting an input relating to the operation of the change button 472 of FIG. 7. The setting method of the machine tool 2 according to the present embodiment includes causing the computer COM to select one selected point $P_S$ from at least one option point $P_O$. In step S8 of FIG. 16, the computer COM executing the measurement point setting program 102 displays the first to third 3D models 111 to 113, the selected point $P_S$, and the program zero $O_P$ in the 3D virtual space VS on the display DIS in a manner that the selected point $P_S$ and the program zero Op can be distinguished from the first to third 3D models 111 to 113. For example, the computer COM displays a view VSV of the 3D virtual space VS as shown in FIG. 1 on the display DIS. That is, the setting method of the machine tool 2 according to the present embodiment includes causing the computer COM to display the first to third 3D models 111 to 113, the selected point $P_S$, and the program zero $O_P$ on the display DIS in the 3D virtual space VS in a manner that the selected point $P_S$ and the program zero $O_P$ can be distinguished from the first to third 3D models 111 to 113.

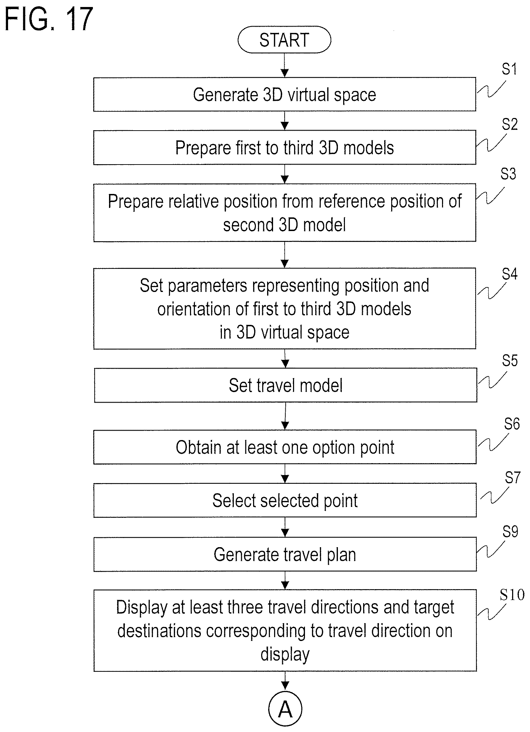

Referring to FIG. 17, when steps S1 to S7 common to FIG. 16 are executed, in step S9, the computer COM executing the probe travel plan generation program 103 generates a travel plan including at least three travel directions AV1 to AV3 (or AV1 to AV4) and a travel speed when the probe 19 is moved toward each of at least three target destinations $P_{T1}$ to $P_{T3}$ (or $P_{T1}$ to $P_{T4}$) on the surface of the workpiece W to obtain the 3D position (for example, machine coordinates) of the selected point $P_S$ based on the selected point $P_S$, the travel model, and the 3D shape of the second 3D model 112. The setting method for a machine tool 2 according to the present embodiment includes causing a computer COM to generate a travel plan including at least three travel directions AV1 to AV3 (or AV1 to AV4) and a travel speed when a probe 19 is moved toward each of at least three target destinations (PT1 to PT3) (or PT1 to PT4) on the surface of a workpiece W in order to obtain the 3D position (for example, machine coordinates) of a selected point $P_S$ on the basis of the selected point PS, a travel model, and the 3D shape of a second 3D model 112.

In step S10 of FIG. 17, the computer COM executing the probe travel plan generation program 103 displays at least three travel directions AV1 to AV3 (or AV1 to AV4) and target destinations $P_{T1}$ to $P_{T3}$ (or $P_{T1}$ to $P_{T4}$) corresponding to the travel directions AV1 to AV3 on the display DIS. The setting method of the machine tool 2 according to the present embodiment includes causing the computer COM to display at least three travel directions AV1 to AV3 (or AV1 to AV4) and target destinations $P_{T1}$ to $P_{T3}$ (or $P_{T1}$ to $P_{T4}$) corresponding to the travel directions AV1 to AV3 on the display DIS.

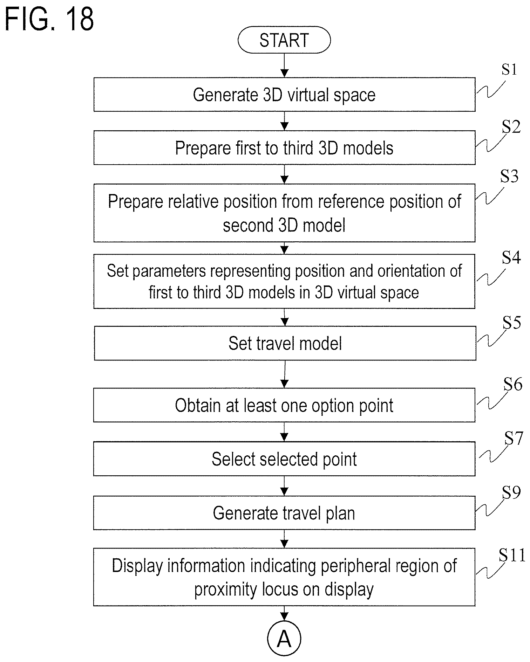

Referring to FIG. 18When steps S1 to S7 and S9 common to those in FIG. 17 are executed the computer COM that executes the probe travel plan generation program 103 displays information (e.g., hatching shown in FIGS. 11 and 13-15) indicating the peripheral region of the proximity locus within a threshold distance from each of the at least three target destinations $P_{T1}$-$P_{T3}$ (or $P_{T1}$-$P_{T4}$) among the loci that move in the travel directions AV1-AV3 (or AV1-AV4) toward each of the at least three target destinations $P_{T1}$-$P_{T3}$ (or $P_{T1}$-$P_{T4}$) on the display DIS.

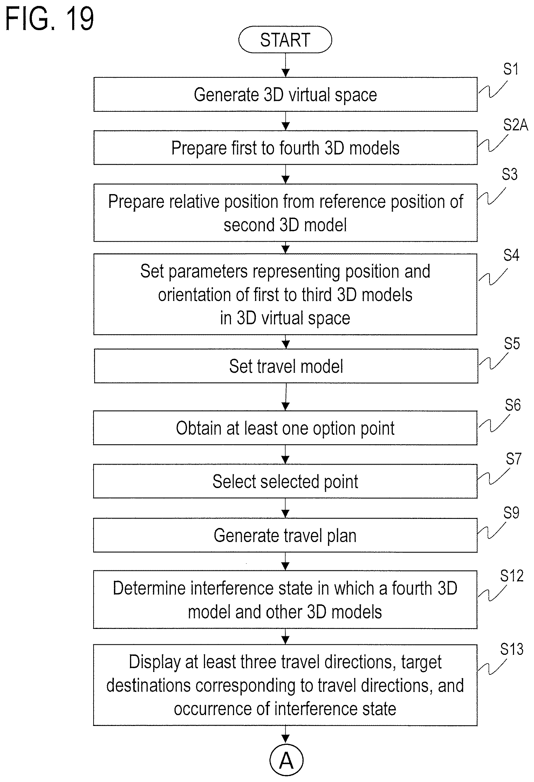

Referring to FIG. 19, the computer COM which executes the movement simulation program 104 comprises prepares, in step S2A instead of step S2, the first to fourth 3D models 111 to 114. Furthermore, the computer COM executing the movement simulation program 104 preferably also provides another 3D model 115. The setting method of the machine tool 2 according to the present embodiment includes preparing the first to fourth 3D models 111 to 114 in the computer COM. It is preferable that the setting method of the machine tool 2 according to the present embodiment includes preparing the fifth 3D model 115 in the computer COM.

When steps S1, S3 to S7, and S9 common to those in FIG. 17 are executed, the computer COM executing the movement simulation program 104 determines whether or not an interference state in which the fourth 3D model 114 and the 3D models 111, 113, and 114 other than the fourth 3D model 114 are in contact with each other occurs when the tip 19E of the probe 19 is moved in at least three travel directions AV1 to AV3 (or AV1 to AV4) toward the corresponding target destinations $P_{T1}$ to $P_{T3}$ (or $P_{T1}$ to $P_{T4}$) according to the travel plan in step S12 of FIG. 19. A setting method for a machine tool 2 according to the present embodiment includes causing a computer COM to determine whether or not an interference state in which a fourth 3D model 114 and 3D models 111, 113, 114 other than the fourth 3D model 114 are in contact with each other occurs when the tip 19E of a probe 19 is moved in at least three travel directions AV1 to AV3 (or AV1 to AV4) toward corresponding target destinations $P_{T1}$ to $P_{T3}$ (or $P_{T1}$ to $P_{T4}$) according to a travel plan.

Then, in step S13 of FIG. 19, the computer COM executing the movement simulation program 104 displays in the 3D virtual space, on a display DIS, the first to fourth 3D models 111-114, the at least three travel directions AV1 to AV3((or AV1 to AV4), the target destinations $P_{T1}$ to $P_{T3}$ (or $P_{T1}$ to $P_{T4}$)) corresponding to the travel directions, and the occurrence of an interference state (for example, a warning (alarm ALA1) as shown in FIG. 9). The setting method of a machine tool 2 according to the present embodiment includes causing a computer COM to display in a 3D virtual space VS, on a display DIS, first to fourth 3D models 111 to 114, at least three travel directions AV1 to AV3 (or AV1 to AV4), target destinations $P_{T1}$ to $P_{T3}$ (or $P_{T1}$ to $P_{T4}$) corresponding to the travel directions, and the occurrence of an interference state.

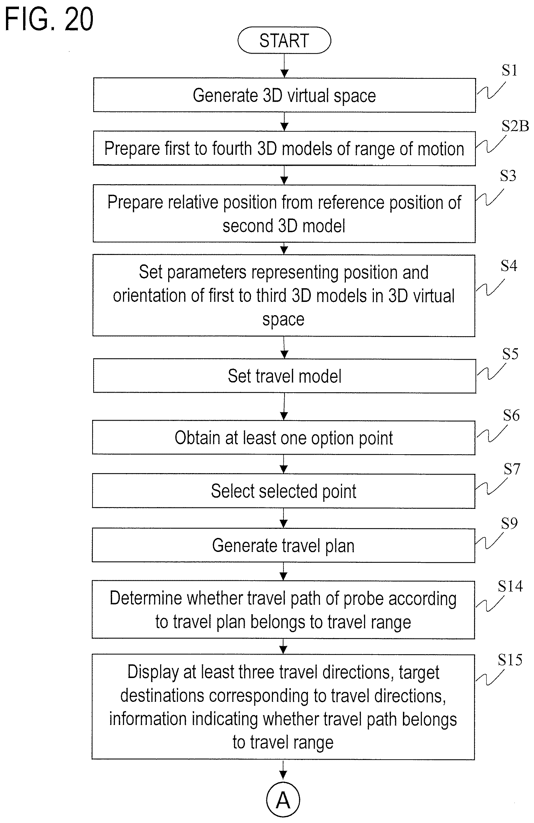

Referring to FIG. 20, the computer COM executing the movement simulation program 104 prepares the first to fourth 3D models 111 to 114 and a 3D model of the range of motion (for example, another 3D model 115) in step S2B instead of step S2. Thus, the computer COM sets the range of motion of the probe 19 in the 3D virtual space VS. That is, the setting method of the machine tool 2 according to the present embodiment includes causing the computer COM to set the range of motion of the probe 19 in the 3D virtual space VS.

When steps S1, S3 to S7, and S9 common to those in FIG. 17 are executed, the computer COM executing the movement simulation program 104, in step S15 of FIG. 20, displays information (alarm as shown in FIG. 12) for identifying whether or not the movement range belongs to the range of motion in addition to the first to fourth 3D models 111 to 114, at least three travel directions AV1 to AV3 (or AV1 to AV4), and corresponding target destinations $P_{T1}$ to $P_{T3}$ (or $P_{T1}$ to $P_{T4}$) in the 3D virtual space VS on the display DIS. The setting method of a machine tool 2 according to the present embodiment includes causing a computer COM to display, on a display DIS, information for identifying whether or not an operation range belongs to a range of motion in addition to first to fourth 3D models 111 to 114, at least three travel directions AV1 to AV3 (or AV1 to AV4) and target destinations $P_{T1}$ to $P_{T3}$ (or $P_{T1}$ to $P_{T4}$) corresponding thereto in a 3D virtual space VS.

At least two of steps S8 in FIG. 16, steps S9 and S10 in FIG. 17, steps S9 and S11 in FIG. 18, steps S9, S12 and S13 in FIG. 19, and steps S9, S14 and S15 in FIG. 20 may be executed simultaneously or selectively. When step S8 in FIG. 16, step S10 in FIG. 17, step S11 in FIG. 18, step S13 in FIG. 19, and step S15 in FIG. 19 are executed, the process proceeds to step S21 in FIG. 21. The computer COM (control computer 20) which executes the program zero measurement program 105 determines whether or not the input of the operation of the measurement start button 492 is accepted in step S21. If the measurement start button 492 is not operated (No in step S21), step S21 is repeated. When the measurement start button 492 is operated (Yes in step S21), the computer COM (control computer 20) which executes the program zero measurement program 105 determines the selected point PS as the measurement point in step S22. The setting method of the machine tool 2 according to the present embodiment includes causing the computer COM (control computer 20) to determine the selected point $P_S$ as the measurement point.

That is, since one of at least one option points $P_O$ is the measurement point , it can be said that the computer COM which executes the measurement point setting program 102 obtains the position in the 3D virtual space VS of the measurement point, at which the 3D position in the real space is measured by bringing the probe 19 which can be mounted on the machine tool 2 into contact with the workpiece W, based on the relative position of the program zero Op, the first to third 3D models 111 to 113, and the parameters. It can be said that the setting method of the machine tool 2 according to the present embodiment includes causing the computer COM to obtain the position in the 3D virtual space VS of the measurement point, at which the 3D position in the real space is measured by bringing the probe 19, which can be mounted on the machine tool 2, into contact with the workpiece W, based on the relative position of the program zero Op, the first to third 3D models 111 to 113, and the parameters.

It can be said that the computer COM executing the measurement point setting program 102 displays the first to third 3D models 111 to 113, the measurement point and the program zero $O_P$ in the 3D virtual space VS in a distinguishable manner from the first to third 3D models 111 to 113. It can be said that the first to third 3D models 111 to 113 are displayed on the display DIS in a distinguishable manner from the first to third 3D models 101 to 102. It can be said that the setting method of the machine tool 2 according to the present embodiment includes causing the computer COM to display the first to third 3D models 111 to 113, the measurement point, and the program zero $O_P$ in the display DIS in a manner that the measurement point and the program zero $O_P$ can be distinguished from the first to third 3D models 111 to 113 in the 3D virtual space VS.

Furthermore, it can be said that the computer COM executing the probe travel plan generation program 103 sets a travel model for moving the tip 19E of the probe 19 in order to obtain the 3D position of the measurement point, and generates a travel plan including travel directions AV1-AV3 (or AV1-AV4) and a travel speed when the probe 19 is moved toward each of at least three target destinations $P_{T1}$-$P_{T3}$ (or $P_{T1}$-$P_{T4}$) on the surface of the workpiece W in order to obtain the 3D position of the measurement point, based on the 3D shapes of the measurement point, the travel model, and the second 3D model 112. It can be said that the setting method of the machine tool 2 according to the present embodiment includes setting the computer COM with the travel model for moving the tip 19E of the probe 19 to obtain the 3D position of the measurement point, and generating the travel plan including the travel directions AV1 to AV3 (or AV1 to AV4) and the travel speed when the probe 19 is moved toward each of at least three target destinations $P_{T1}$ to $P_{T3}$ (or $P_{T1}$ to $P_{T4}$) on the surface of the workpiece W to obtain the 3D position of the measurement point based on the 3D shapes of the measurement point, the travel model, and the second 3D model 112.

Referring back to FIG. 21, in step S23 of FIG. 21, the computer COM (control computer 20) executing the program zero measurement program 105 moves the probe 19 in accordance with the travel plan of the selected point $P_S$ to measure the 3D position of the measurement point. That is, it can be said that the computer COM (control computer 20) which executes the program zero measurement program 105 moves the probe 19 in accordance with the travel plan of the measurement point to measure the 3D position of the measurement point. The setting method of the machine tool 2 according to the present embodiment includes moving the probe 19 in accordance with the travel plan of the selected point PS to cause the computer COM (control computer 20) to measure the 3D position of the measurement point. The setting method of the machine tool 2 according to the present embodiment includes moving the probe 19 in accordance with the travel plan of the selected point PS to cause the computer COM (control computer 20) to measure the 3Dposition of the measurement point.

In step S24 of FIG. 21, the computer COM (control computer 20) executing the program zero measurement program 105 determines the machine coordinates of the program zero $O_P$ based on the 3D position of the measurement point and the positional relationship between the measurement point and the program zero $O_P$. The setting method of the machine tool 2 according to the present embodiment includes causing the computer COM (control computer 20) to determine the machine coordinates of the program zero Op based on the 3D position of the measurement point and the positional relationship between the measurement point and the program zero Op.

In step S25 of FIG. 21, the computer COM (control computer 20) which executes the program zero measurement program 105 sets the correspondence relationship between the work coordinate system and the machine coordinate system with the program zero $O_P$ as a reference based on the machine coordinate of the program zero $O_P$. The setting method of the machine tool 2 according to the present embodiment includes causing the computer COM (control computer 20) to set the correspondence relationship between the work coordinate system and the machine coordinate system with the program zero $O_P$ as a reference based on the machine coordinate of the program zero $O_P$.

Characteristics and Effects of Control Method of Machine Tool in the Present Embodiment

The machine tool system 1, the machine tool 2, the graphics processing computer device 4, the setting method of the machine tool 2, and the programs 102 to 105 for causing the computer COM to execute the setting method according to the present embodiment calculate the position of the program zero $O_P$ in the 3D virtual space VS without separately setting the position of the program zero $O_P$, if the position and orientation of each of the first to third 3D models 111 to 113 in the 3D virtual space VS are set. Accordingly, the programmer can set the program zero $O_P$ automatically by setting only the first to third 3D models 111 to 113, and thus the setting in the 3D virtual space VS can be facilitated. Further, even when the operation cannot be performed as instructed due to circumstances such as the working environment of the machine tool 2, the operator can alternatively determine the measurement point in the computer numerical controller of the machine tool 2 without changing the program zero $O_P$ in the workpiece W set by the programmer.

Modification

The GUI of radio buttons, text boxes, buttons, etc. shown in the above embodiments is an example, and other known GUIs having equivalent functions, or a command user interface (CUI), or other user interface may be used.

Although the above embodiment shows an example in which the machine tool 2 is a vertical machining center, the contents of this embodiment can be applied to a machine tool 2 including a horizontal machining center, a lathe, and an additional manufacturing apparatus.

A part or all of the functions of the logic of the measurement point setting program 102, the probe travel plan generation program 103, the movement simulation program 104, and the program zero measurement program 105 of the computer COM may be realized by a dedicated processor or an integrated circuit. The measurement point setting program 102, the probe travel plan generation program 103, the movement simulation program 104, and the program zero measurement program 105 described above are not limited to the storage devices (memories 32 and 72) of the computer COM, and may be recorded on a storage medium which is detachable from the computer COM and readable by the computer COM, such as a floppy disk, an optical disk, a disk such as a CD-ROM or a magnetic disk, an SD card, a USB memory, or an external hard disk.

In this application, "comprising" and its derivatives are non-limiting terms that describe the presence of a component and do not exclude the presence of other components that are not described. This also applies to "have", "include" and their derivatives.

The terms "member," "part," "element," "body," and "structure" can have multiple meanings, such as a single part or multiple parts.

Ordinal numbers such as "first" and "second" are terms that are merely used to identify the configuration and have no other meaning (e.g., a specific order). For example, the presence of a "first element" does not imply the presence of a "second element", and the presence of a "second element" does not imply the presence of a "first element".

The terms "substantially," "about," and "approximately" to express a degree may mean a reasonable amount of deviation such that the final result is not significantly altered, unless otherwise stated in the embodiments. All numerical values described herein may be interpreted to include the words "substantially", "about", and "approximately".

In this application, the phrase "at least one of A and B" should be interpreted to include only A, only B, and both A and B.

It will be apparent from the above disclosure that various modifications and alterations of the present invention are possible. Accordingly, the present invention may be practiced by a method other than the specific disclosure of the present application without departing from the spirit of the present invention.

**Claims**

**1.** A setting method of a machine tool, comprising:

controlling a computer to generate a 3D virtual space that represents a virtual reality environment;
controlling the computer to prepare

a first 3D model representing a table of the machine tool;
a second 3D model representing a workpiece provided on the machine tool;
a third 3D model representing a fixture to fasten the workpiece to the table; and
a relative position of a program zero with respect to a reference position of the second 3D model, the program zero being used in a machining program to machine the workpiece;
controlling the computer to set parameters representing positions and orientations of the first to third 3D models, respectively in the 3D virtual space; and
controlling the computer to obtain a position of a measurement point in the 3D virtual space based on the relative position of the program zero, the first to third 3D models, and the parameters,
a 3D position of the measurement point in a real space being calculated by contacting with the workpiece, a probe attachable to the machine tool.

2. The setting method of the machine tool, according to claim 1, further comprising:
controlling the computer to display in the 3D virtual space, the first to third 3D models, the measurement point, and the program zero in a display in a manner that the measurement point and the program zero are distinguishable from the first to third 3D models.

3. The setting method of the machine tool, according to claim 1 or 2, further comprising:

controlling the computer to set a travel model for moving a tip of the probe in order to obtain the 3D position of the measurement point; and
controlling the computer to generate, based on the measurement point, the travel model, and a 3D shape of the second 3D model, a travel plan according to which the probe travels toward each of at least three target destinations on a surface of the workpiece to obtain the 3D position of the measurement point, the travel plan including a travel direction and a travel speed,
wherein the travel speed of the probe when a distance between the tip and the target destination is within a predetermined threshold is smaller than the travel speed of the probe when a distance between the tip and the target destination is over the predetermined threshold.

4. The setting method of the machine tool, according to claim 3, further comprising:

controlling the computer to measure the 3D position of the measurement point by moving the probe according to the travel plan;
controlling the computer to determine machine coordinates of the program zero based on the 3D position and a positional relation between the measurement point and the program zero; and
controlling the computer to set, based on the machine coordinates of the program zero, correspondence between a machine coordinate system and a work coordinate system whose origin is the program zero,
wherein the computer is a computer included by a computer numerical controller in the machine tool.

5. The setting method of the machine tool, according to claim 1,
wherein the computer is controlled to obtain a position of at least one option point in the 3D virtual space based on the relative position of the program zero, the first to third 3D models, and the parameters, the at least one option point being at least one point including the measurement point, the at least one option point being obtained such that respective 3D position of the at least one option point in the real space is measurable by contacting the probe with the workpiece.

6. The setting method of the machine tool, according to claim 5, further comprising:

controlling the computer to select a selected point from the at least one option point; and
controlling the computer to display in the 3D virtual space, the first to third 3D models, the selected point, and the program zero in a display in a manner that the selected point and the program zero are distinguishable from the first to third 3D models.

7. The setting method of the machine tool, according to claim 5 or 6, further comprising:

controlling the computer to select a selected point from the at least one option point;

controlling the computer to set a travel model for moving a tip of the probe in order to obtain the 3D position of the selected point; and

controlling the computer to generate, based on the selected point, the travel model, and a 3D shape of the second 3D model, a travel plan according to which the probe travels toward each of at least three target destinations on a surface of the workpiece to obtain the 3D position of the selected point, the travel plan including a travel direction and a travel speed,

wherein the travel speed of the probe when a distance between the tip and the target destination is within a predetermined threshold is smaller than the travel speed of the probe when a distance between the tip and the target destination is over the predetermined threshold.

8.  The setting method of the machine tool, according to claim 7, further comprising:

controlling the computer to determine the selected point as the measurement point; and

controlling the computer to measure the 3D position of the measurement point by moving the probe according to the travel plan;

controlling the computer to determine machine coordinates of the program zero based on the 3D position and a positional relation between the measurement point and the program zero; and

controlling the computer to set, based on the machine coordinates of the program zero, correspondence between a machine coordinate system and a work coordinate system whose origin is the program zero,

wherein the computer is a computer included by a computer numerical controller in the machine tool.

9.  The setting method of the machine tool, according to claim 3 or 7, further comprising:
controlling the computer to display in a display, information indicating a peripheral region with respect to an approaching path along which the probe travels to each of the at least three target destinations in the travel direction and which is within a distance threshold relative to each of the at least three target destinations.

10. The setting method of the machine tool, according to any one of claims 3, 7, and 9, further comprising:

controlling the computer to provide a fourth 3D model reproducing the probe;

controlling the computer to determine whether or not an interference state occurs, the interference state being a state in which the fourth 3D model contacts with a 3D model other than the fourth 3D model when the tip travels toward each of the at least three target destinations according to the travel plan; and

controlling the computer to display in the display, in the 3D virtual space, the first to fourth 3D models, the at least three travel directions, the target destinations corresponding to the travel directions, respectively, and the occurrence of the interference state.

11. The setting method of the machine tool, according to any one of claims 3, 7, 9, and 10, further comprising:

controlling the computer to set a travel range of the probe in the 3D virtual space;

controlling the computer to determine whether a travel path of the probe according to the travel plan belongs to the travel range; and

controlling the computer to display in the display, in the 3D virtual space, the first to fourth 3D models, the at least three travel directions, the target destinations corresponding to the travel directions, respectively, and information indicating whether the travel path belongs to the travel range.

12. A computer configured to perform the setting method of the machine tool according to any one of claims 1 to 3, 5 to 7, and 9 to 11.

13. A machine tool comprising a computer configured to perform the setting method of the machine tool according to any one of claims 1 to 11.

14. A machine tool system comprising:

a computer configured to perform the setting method of the machine tool according to any one of claims 2, 6, and 9 to 11;

a machine tool comprising:

a computer numerical controller connected to the computer via a communication network; and
the display configured to visually display an output of the computer numerical controller.

15. A computer program comprising instructions to cause, when executed by a computer, the computer to execute steps of the setting method of a machine tool according to any one of claims 1 to 11.

# FIG. 1

EP 4 699 741 A1

Memory

100 — Machining Program Generation Program

101 — Machining Program

102 — Measurement Point Setting Program

103 — Probe Travel Plan Generation Program

104 — Movement Simulation Program

110 — 3D Model of Product

111 — First 3D Model

112 — Second 3D Model

113 — Third 3D Model

114 — Fourth 3D Model

115 — Other 3D Model

119 — Virtual Space Management Data

72

90 (DIS) — PC Monitor

80 (INT) — Programmer Input I/F

70, 60(COM)

71 — Processor

76 — I/O Interface

77 — Communication I/F

4

Memory

Machining Program — 101

Measurement Point Setting Program — 102

Probe Travel Plan Generation Program — 103

Movement Simulation Program — 104

Program Zero Measurement Program — 105

First 3D Model — 111

Second 3D Model — 112

Third 3D Model — 113

Fourth 3D Model — 114

Other 3D Model — 115

Virtual Space Management Data — 119

32

Processor — 31

I/O Interface

Communication I/F — 35

36

37

CNC Monitor — 50(DIS)

Operator Input I/F — 40(INT)

Head Drive Mechanism — 13

Rotation Drive Device — 14

2

3

75

1

30, 20(COM)

FIG. 2

30

# FIG. 3

*FIG. 4*

# FIG. 5

EP 4 699 741 A1

A [ 400. ] ⟋401   F [ 50. ] ⟋406

B [ 0. ] ⟋402   G [ 50. ] ⟋407

C [ 50. ] ⟋403   J [ 80. ] ⟋408

D [ 150. ] ⟋404   K [ 199. ] ⟋409

E [ 50. ] ⟋405

## Spacer

411⟋◉ Presence   412⟋◯ Absence

W [ 10. ] ⟋421   H [ 30. ] ⟋422

Y1 [ 850. ] ⟋425

X1 ⟋423 [ 101. ]

X2 [ 300. ] ⟋424

Y2 [ 30. ] ⟋426

Rotation Angle of Table θx [ 0. ] ⟋427

Height from Table HT [ 0. ] ⟋428

Rotation Angle of Fixture with respect to Table θx

431⟋◉ 0°   432⟋◯ 90°

433⟋◉ 180°   434⟋◯ 270°

33

EP 4 699 741 A1

# FIG. 6

441 — Move

444 Plane

445 Point Designate

Plane

446

447

448

456 50. 458

457

451
452
453 454

SF2  SF3  112  SF4

113  SF1

$Z_{RJ}$

$n_0$

$n_1$

$Y_{RJ}$  $X_{RJ}$

WV  111

34

# FIG. 7

EP 4 699 741 A1

460

## Measurement Pattern

461 ● Three Point Measurement (Square Bar/Corner)

462 ○ Three Point Measurement (Square Groove/Corner)

463 ○ Four Point Measurement (Cylinder/Bottom Surface Center)

464 ○ Four Point Measurement (Circle Groove/
Bottom Surface Center)

470

## Measurement Point Position

X   -450.

Y   -304.75   } 471

Z   -540.

472  [ Change ]

491
## Simulation Start

492
## Measurement Start

480

## Position of Target Destination

### Distance from Measurement Point

k1  [ 10. ]  481    k2  [ 4.8672 ]  482

Target Destination 1    X   -460.

Y   -314.75   } 483

Z   -540.

Target Destination 2    X   -450.

Y   -314.75   } 484

Z   -544.8672

Target Destination 3    X   -460.

Y   -304.75   } 485

Z   -544.8672

# FIG. 8

EP 4 699 741 A1

# FIG. 9

$Z_M$

$X_M$

$Y_M$

Path1

High-Speed Movement
+ Rotation

AX1

17 (Orientation in $P_{A1}$)

17

$O_M$

$O_M$

19(114)

19(114)

$P_E$

19E

19E

$P_{D1}$、$P_{D2}$、$P_{D2}$
( Deceleration Starting Points)

Path2

$P_E$ ($P_{A1}$、$P_{A2}$、$P_{A3}$)

AV1

AX1

ALA1

$P_{T1}$

D2

D1

Obstacles
(115)

17
(Orientation in $P_{A2}$、$P_{A3}$)

W

$Y_W$ $Z_W$
$X_W$ $O_W$

VS

Local Coordinate: $(X_{PT3R}, Y_{PT3R}, Z_{PT3R})$
World Coordinate: $(X_{PT3W}, Y_{PT3W}, Z_{PT3W})$

$P_{T3}$

$P_0$ $(P_{AS2})$

BP (PS1)

112

$P_0$

e2

AV1 $= -\overrightarrow{n_{P1}}$
$(V_{X1R}, V_{Y1R}, V_{Z1R})$ (Local Coordinate System)
$(V_{X1W}, V_{Y1W}, V_{Z1W})$ (World Coordinate System)

$P_{T1}$
$(X_{PT1R}, Y_{PT1R}, Z_{PT1R})$: Local Coordinate
$(X_{PT1W}, Y_{PT1W}, Z_{PT1W})$: World Coordinate

$P_0$ $(P_{AS1})$
$(X_{S1R}, Y_{S1R}, Z_{S1R})$: Local Coordinate
$(X_{S1W}, Y_{S1W}, Z_{S1W})$: World Coordinate

e1

AV3 $= -\overrightarrow{n_{P3}}$
(Local Coordinate System) $(V_{X3R}, V_{Y3R}, V_{Z3R})$
(World Coordinate System) $(V_{X3W}, V_{Y3W}, V_{Z3W})$

MP

$Y_{RW}$ $Z_{RW}$
$X_{RW}$ $O_{RW}$

VSV

111

e3

PS3

$P_{AS3}$

Local Coordinate: $(X_{S3R}, Y_{S3R}, Z_{S3R})$
World Coordinate: $(X_{S3W}, Y_{S3W}, Z_{S3W})$

$P_S$ $(P_0)$
Local Coordinate: $(X_{SR}, Y_{SR}, Z_{SR})$
World Coordinate: $(X_{SW}, Y_{SW}, Z_{SW})$

$P_{T2}$
$(X_{PT2R}, Y_{PT2R}, Z_{PT2R})$: Local Coordinate
$(X_{PT2W}, Y_{PT2W}, Z_{PT2W})$: World Coordinate

AV2 $= -\overrightarrow{n_{P2}}$
$(V_{X2R}, V_{Y2R}, V_{Z2R})$ (Local Coordinate System)
$(V_{X2W}, V_{Y2W}, V_{Z2W})$ (World Coordinate System)

113

PS2

**FIG. 10**

FIG. 11

FIG. 12

FIG. 13

# FIG. 14

# FIG. 15

# FIG. 16

```
                      ( START )
                          │
                          ▼
   ┌────────────────────────────────────────┐  S1
   │        Generate 3D virtual space        │
   └────────────────────────────────────────┘
                          │
                          ▼
   ┌────────────────────────────────────────┐  S2
   │       Prepare first to third 3D models  │
   └────────────────────────────────────────┘
                          │
                          ▼
   ┌────────────────────────────────────────┐  S3
   │ Prepare relative position from reference│
   │    position of second 3D model          │
   └────────────────────────────────────────┘
                          │
                          ▼
   ┌────────────────────────────────────────┐  S4
   │  Set parameters representing position   │
   │  and orientation of first to third 3D   │
   │      models in 3D virtual space         │
   └────────────────────────────────────────┘
                          │
                          ▼
   ┌────────────────────────────────────────┐  S5
   │             Set travel model            │
   └────────────────────────────────────────┘
                          │
                          ▼
   ┌────────────────────────────────────────┐  S6
   │       Obtain at least one option point  │
   └────────────────────────────────────────┘
                          │
                          ▼
   ┌────────────────────────────────────────┐  S7
   │           Select selected point         │
   └────────────────────────────────────────┘
                          │
                          ▼
   ┌────────────────────────────────────────┐  S8
   │ Display first to third 3D models,       │
   │ selected point, and program zero on     │
   │ display                                 │
   └────────────────────────────────────────┘
                          │
                          ▼
                        ( A )
```

# FIG. 17

```
                    ( START )
                        │
                        ▼
        ┌───────────────────────────────┐  S1
        │   Generate 3D virtual space    │
        └───────────────────────────────┘
                        │
                        ▼
        ┌───────────────────────────────┐  S2
        │   Prepare first to third 3D models │
        └───────────────────────────────┘
                        │
                        ▼
        ┌───────────────────────────────┐  S3
        │ Prepare relative position from reference position of │
        │            second 3D model            │
        └───────────────────────────────┘
                        │
                        ▼
        ┌───────────────────────────────┐  S4
        │  Set parameters representing position and   │
        │   orientation of first to third 3D models   │
        │            in 3D virtual space           │
        └───────────────────────────────┘
                        │
                        ▼
        ┌───────────────────────────────┐  S5
        │          Set travel model          │
        └───────────────────────────────┘
                        │
                        ▼
        ┌───────────────────────────────┐  S6
        │      Obtain at least one option point      │
        └───────────────────────────────┘
                        │
                        ▼
        ┌───────────────────────────────┐  S7
        │           Select selected point          │
        └───────────────────────────────┘
                        │
                        ▼
        ┌───────────────────────────────┐  S9
        │           Generate travel plan          │
        └───────────────────────────────┘
                        │
                        ▼
        ┌───────────────────────────────┐  S10
        │ Display at least three travel directions and target │
        │  destinations corresponding to travel direction on  │
        │                 display                 │
        └───────────────────────────────┘
                        │
                        ▼
                      ( A )
```

# FIG. 18

```
                    ( START )
                        │
                        ▼                      S1
  ┌─────────────────────────────────────┐
  │      Generate 3D virtual space      │
  └─────────────────────────────────────┘
                        │
                        ▼                      S2
  ┌─────────────────────────────────────┐
  │      Prepare first to third 3D models │
  └─────────────────────────────────────┘
                        │
                        ▼                      S3
  ┌─────────────────────────────────────┐
  │ Prepare relative position from reference position of │
  │             second 3D model          │
  └─────────────────────────────────────┘
                        │
                        ▼                      S4
  ┌─────────────────────────────────────┐
  │ Set parameters representing position and orientation of │
  │   first to third 3D models in 3D virtual space │
  └─────────────────────────────────────┘
                        │
                        ▼                      S5
  ┌─────────────────────────────────────┐
  │            Set travel model          │
  └─────────────────────────────────────┘
                        │
                        ▼                      S6
  ┌─────────────────────────────────────┐
  │      Obtain at least one option point │
  └─────────────────────────────────────┘
                        │
                        ▼                      S7
  ┌─────────────────────────────────────┐
  │          Select selected point       │
  └─────────────────────────────────────┘
                        │
                        ▼                      S9
  ┌─────────────────────────────────────┐
  │           Generate travel plan       │
  └─────────────────────────────────────┘
                        │
                        ▼                      S11
  ┌─────────────────────────────────────┐
  │ Display information indicating peripheral region of │
  │          proximity locus on display  │
  └─────────────────────────────────────┘
                        │
                        ▼
                       (A)
```

FIG. 19

START

Generate 3D virtual space — S1

Prepare first to fourth 3D models — S2A

Prepare relative position from reference position of second 3D model — S3

Set parameters representing position and orientation of first to third 3D models in 3D virtual space — S4

Set travel model — S5

Obtain at least one option point — S6

Select selected point — S7

Generate travel plan — S9

Determine interference state in which a fourth 3D model and other 3D models — S12

Display at least three travel directions, target destinations corresponding to travel directions, and occurrence of interference state — S13

A

# FIG. 20

```
        ( START )
            │
            ▼
┌──────────────────────────────┐   S1
│   Generate 3D virtual space   │
└──────────────────────────────┘
            │
            ▼
┌──────────────────────────────────────────┐   S2B
│ Prepare first to fourth 3D models of range of motion │
└──────────────────────────────────────────┘
            │
            ▼
┌──────────────────────────────────────────┐   S3
│ Prepare relative position from reference position of │
│              second 3D model              │
└──────────────────────────────────────────┘
            │
            ▼
┌──────────────────────────────────────────┐   S4
│   Set parameters representing position and │
│ orientation of first to third 3D models in 3D virtual │
│                   space                    │
└──────────────────────────────────────────┘
            │
            ▼
┌──────────────────────────────┐   S5
│        Set travel model       │
└──────────────────────────────┘
            │
            ▼
┌──────────────────────────────┐   S6
│   Obtain at least one option point │
└──────────────────────────────┘
            │
            ▼
┌──────────────────────────────┐   S7
│      Select selected point     │
└──────────────────────────────┘
            │
            ▼
┌──────────────────────────────┐   S9
│      Generate travel plan      │
└──────────────────────────────┘
            │
            ▼
┌──────────────────────────────────────────┐   S14
│ Determine whether travel path of probe according │
│    to travel plan belongs to travel range  │
└──────────────────────────────────────────┘
            │
            ▼
┌──────────────────────────────────────────┐   S15
│ Display at least three travel directions, target │
│ destinations corresponding to travel directions, │
│ information indicating whether travel path belongs │
│               to travel range              │
└──────────────────────────────────────────┘
            │
            ▼
          ( A )
```

FIG. 21

(A)

Operation of measurement start button? — S21 — NO

↓ YES

Determine selected point as measurement point — S22

Measure 3D position of measurement point — S23

Determine machine coordinates of program zero — S24

Set correspondence relationship between work coordinate system and machine coordinate system — S25

END

## INTERNATIONAL SEARCH REPORT

| International application No. |
|---|
| **PCT/JP2024/009577** |

**A. CLASSIFICATION OF SUBJECT MATTER**

***B23Q 15/00***(2006.01)i; ***G05B 19/18***(2006.01)i
FI: B23Q15/00 309A; G05B19/18 A

According to International Patent Classification (IPC) or to both national classification and IPC

**B. FIELDS SEARCHED**

Minimum documentation searched (classification system followed by classification symbols)

B23Q15/00; G05B19/18; B23Q17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2010-117982 A (INCS INC.) 27 May 2010 (2010-05-27)<br>paragraphs [0047]-[0077], fig. 1-13 | 1-15 |
| Y | JP 2018-45727 A (MAKINO MILLING MACH CO., LTD.) 22 March 2018 (2018-03-22)<br>paragraphs [0048]-[0068], fig. 1-7 | 1-15 |
| Y | JP 2017-21723 A (FANUC CORPORATION) 26 January 2017 (2017-01-26)<br>paragraph [0049] | 3-4, 7-15 |
| Y | WO 2019/097601 A1 (MITSUBISHI ELECTRIC CORPORATION) 23 May 2019 (2019-05-23)<br>paragraphs [0067]-[0082], fig. 17-18 | 11-15 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

International application No.

**PCT/JP2024/009577**

| Patent document cited in search report | | | Publication date (day/month/year) | Patent family member(s) | Publication date (day/month/year) |
|---|---|---|---|---|---|
| JP | 2010-117982 | A | 27 May 2010 | (Family: none) | |
| JP | 2018-45727 | A | 22 March 2018 | (Family: none) | |
| JP | 2017-21723 | A | 26 January 2017 | US 2017/0017226 A1 paragraph [0074] <br> DE 102016008284 A <br> CN 106346315 A | |
| WO | 2019/097601 | A1 | 23 May 2019 | (Family: none) | |

Form PCT/ISA/210 (patent family annex) (July 2022)

**EP 4 699 741 A1**

**REFERENCES CITED IN THE DESCRIPTION**

**Patent documents cited in the description**

- JP 63091351 U
- WO 2021161530 A
- WO 2021014571 A